# EUROPÄISCHE PATENTSCHRIFT

(11) **EP 1 810 791 B1**
(45) Veröffentlichungstag und Bekanntmachung des Hinweises auf die Patenterteilung: **14.07.2010**
(21) Anmeldenummer: 06025911.6
(22) Anmeldetag: 14.12.2006
(51) Int. Cl.: B25B 27/30

(54) **Vorrichtung zum Spannen einer Schraubenfeder eines Federdämpferbeines**
Device for compressing a coil spring of a suspension strut
Dispositif pour comprimer un ressort hélicoidal d'un ensemble ressort - amortisseur

(30) Priorität: 23.01.2006 DE 102006003284
(43) Veröffentlichungstag der Anmeldung: 25.07.2007
(73) Patentinhaber: Klann Spezial-Werkzeugbau GmbH, 78166 Donaueschingen (DE)
(72) Erfinder: Klann, Horst, 78052 Villingen-Schwenningen (DE)
(74) Vertreter: Neymeyer, Franz

(56) Entgegenhaltungen:
- WO-A-01/17727
- US-A- 5 172 462
- US-A- 5 507 470
- US-B1- 6 336 625

## Beschreibung

Die Erfindung betrifft eine Vorrichtung zum Spannen einer Schraubenfeder eines Federdämpferbeines bestehend aus einem Stellglied sowie zwei Stützelementen, deren Abstand durch eine Betätigung des Stellgliedes veränderbar ist und welche mit einem Teil des Federdämpferbeines oder der im Federdämpferbein zwischen einem unteren und einem oberen Federteller unter Vorspannung aufgenommenen Schraubenfeder in Eingriff bringbar sind, wobei eines der Stützelemente zwei Halteelemente aufweist, welche relativ zueinander verstellbar mit dem Stellglied in Verbindung stehen.

Federdämpferbeine sind schon seit Jahren bei Achskonstruktionen von Kraftfahrzeugen bekannt. Solche Federdämpferbeine bestehen aus einem Dämpferrohr, an welchem ein feststehender Federteller zur Aufnahme einer Schraubenfeder angeordnet ist. Dieses Dämpferrohr enthält einen Stoßdämpfer mit einer axial beweglichen Kolbenstange, welche ihrerseits wiederum an ihrem freien, aus dem Dämpferrohr herausragenden Ende, mit einem zweiten Federteller bestückbar ist. Im montierten Zustand wird die Schraubenfeder unter Vorspannung zwischen den beiden Federtellern aufgenommen. Desweiteren kann der obere Federteller der Kolbenstange noch mit einem Drehlager versehen sein, über welches das Federdämpferbein drehbar an der Karosserie eines Kraftfahrzeuges befestigbar ist.

Zu Reparaturzwecken, sei es zum Austauschen des Stoßdämpfers oder der Schraubenfeder, sind nun seit langem Vorrichtungen zum Spannen der Schraubenfeder bekannt.

So wird hier beispielhaft auf die DE 196 31 524 C1, DE 296 22 463 U1, DE 298 19 740 U1 sowie die DE 200 19 720 U1 verwiesen. All diesen Vorrichtungen ist ein Stellglied gemeinsam, mittels welchem zwei Stützelemente relativ zueinander bewegbar sind. Dabei sind Stellglieder vorgesehen, welche sich teleskopartig verkürzen, so dass jedes der Stützelemente jeweils in einem der Endbereiche des Stellgliedes feststehend angeordnet ist. Dabei werden die beiden Stützelemente unverdrehbar gegeneinander am Stellglied gehalten. In anderen Konstruktionen bildet das Stellglied ein Führungsrohr, an dessen einem Ende über unterschiedliche Montageelemente eines der Stützelemente feststehend angeordnet ist.

Auf diesem Führungsrohr ist axial verschiebbar das zweite Stützelement entweder direkt oder über eine Führungshülse unverdrehbar geführt. In der Regel weisen solche Stellglieder als Antrieb einen Spindeltrieb auf, durch dessen Betätigung der Abstand zwischen den beiden Stützelementen veränderbar ist.

Zum Spannen unterschiedlicher Schraubenfedern von unterschiedlichen Federdämpferbeinen sind nun unterschiedliche Stützelemente bekannt geworden.

So ist beispielsweise aus der DE 200 19 720 U1 ein Stützelement in Form einer Greiferklaue bekannt, welches direkt mit einer der Federwindungen der Schraubenfeder in Eingriff bringbar ist.

Beim Gegenstand dieser Druckschrift sind die beiden Stützelemente bzw. Greiferklauen jeweils aufeinander zugeneigt zur Längsmittelachse des Stellgliedes ausgebildet, so dass mittels dieser Vorrichtung, insbesondere gebogen in einem Kraftfahrzeug eingebaute Schraubenfedern spannbar sind. Dabei sind solche Schraubenfedern in der Regel nicht Bestandteil eines Federdämpferbeines. Jedoch sind die Vorrichtungen gemäß dieser Druckschrift in ihrem grundsätzlichen Aufbau identisch aufgebaut wie Vorrichtungen, welche speziell für das Spannen von Schraubenfedern eines Federdämpferbeines vorgesehen sind.

Beim Gegenstand der DE 298 19 740 U1 ist eines der Stützelemente ebenfalls als Greiferklaue ausgebildet, welche ebenfalls mit der Federwindung einer in einem Federdämpferbein angeordneten Schraubenfeder in Eingriff bringbar ist. Das zweite Stützelement ist hier ringförmig ausgebildet und wird zum Spannen der Schraubenfeder auf den oberen Federteller aufgesetzt. Dabei kann die Auflagefläche dieses "Stützringes" an die Kontur, insbesondere der Steigung des Federtellers angepaßt sein, so dass eine optimale Führung des Federtellers und damit auch der Schraubenfeder erreichbar ist.

Beim Gegenstand der DE 296 22 463 U1 sind zwei gabelförmige Greiferelemente vorgesehen, welche mit den Federwindungen einer zu spannenden Schraubenfeder in Eingriff bringbar sind. Dabei sind hier die beiden Greiferklauen austauschbar am Führungsrohr des Stellgliedes angeordnet, was bei den oben kurz angesprochenen Vorrichtungen ebenfalls der Fall ist. Durch diese variable Austauschbarkeit können am Stellglied unterschiedlich geformte Stützelemente in Form von Greiferklauen oder Stützringen vorgesehen werden, um unterschiedlich dimensionierte und in ihrer Steigung unterschiedlich verlaufende Schraubenfedern spannen zu können. Auch dient eine solche Anpassung, insbesondere wenn ein Spannring verwendet wird, welcher auf den oberen Federteller aufsetzbar ist, dazu, eine möglichst optimale Anpassung an die gegebenen geometrischen Bedingungen an einem Federdämpferbein vornehmen zu können.

Zur auswechselbaren Montage dieser Greiferklauen oder Greiferelemente sind unterschiedliche mechanische Verbindungen vorgesehen. So können die Greiferelemente beispielsweise feststehend am Führungsrohr über eine Schraubverbindung befestigt sein. Desweiteren sind auch Bajonettverbindungen vorgesehen. Weiter sind aus dem Stand der Technik Nut-Federsysteme und Doppel-T-Profile bekannt, deren miteinander in Eingriff bringbaren Elemente einerseits am Greiferelement oder der Greiferklaue und andererseits am Führungsrohr bzw. an einer entlang des Führungsrohres bewegbaren Führungshülse angeordnet sind.

All diesen Konstruktionen ist gemeinsam, dass diese zwar aufgrund unterschiedlich dimensionierter Sätze von Greiferelementen bzw. Stützelementen für unterschiedlich dimensionierte Federdämpferbeine mit unterschiedlich dimensionierten Schraubenfedern einsetzbar sind. Nachteilig an diesen Konstruktionen ist, dass eben für solche unterschiedliche Federdämpferbeine auch in der Regel mehrere Sätze von unterschiedlich dimensionierten Stützelementen vorgesehen sein müssen.

Beim Gegenstand der US 5 172 462 A handelt es sich um einen stationären Federspanner, welcher eine teleskopartig in seiner Länge veränderbares Stellglied aufweist. Im oberen Endbereich bildet das Stellglied ein in ein Führungsrohr einschiebbares Teleskoprohr, an dessen oberen Ende ein Stützelement feststehend angeordnet ist. Dieses Stützelement weist zwei jeweils um eine vertikale Achse schwenkbare Tragbügel auf, an deren freien Enden jeweils Haltelemente in Form von Haltehaken angeordnet sind. Diese Haltehaken sind in Längsschlitzen der Tragbügel längsverstellbar und drehbar aufgenommen. Das zweite Stützelement ist als eine Art Rohrschelle ausgebildet und feststehend am Führungsrohr angeordnet. Diese Rohrschelle dient zur feststehenden Aufnahme des Dämpferrohres eines Federdämpferbeines, dessen Schraubenfeder gespannt werden soll. Eine Anpassung des oberen Stützelementes insbesondere an Schraubenfedern mit unterschiedlicher Steigung ist hier nicht möglich, da die beiden Tragbügel lediglich um eine parallel zur Längsmittelachse des Führungsrohres verlaufende Schwenkachse schwenkbar sind und somit die beiden Haltehaken in ihrer vertikalen Stellung relativ zum Teleskoprohr nicht einstellbar sind. Durch die freie Schwenkbarkeit der Tragbügel kann auf die Hakenform der Haltehaken auch nicht verzichtet werden, da diese ansonsten nicht an einer Federwindung fixierbar wären. Weiter kann diese Konstruktion auch nicht an Schraubenfedern mit einer linksgängigen oder einer rechtgängigen Steigung angesetzt werden, da die vertikale Position der Haltehaken über die Tragbügel festgelegt ist und somit entweder auf einen linksgängige Steigung oder eine rechtsgängige Steigung der Schraubenfeder auszulegen ist.

Demgemäß liegt der Erfindung die Aufgabe zugrunde, eine Vorrichtung der gattungsgemäßen Art derart zu verbessern, dass diese für unterschiedlich dimensionierte Federdämpferbeine mit unterschiedlich dimensionierten Schraubenfedern, insbesondere sowohl für Schraubenfedern mit linkgängigem als auch rechtsgängigem Steigungsverlauf einsetzbar ist.

Die Aufgabe wird zusammen mit den Merkmalen des Oberbegriffes dadurch gelöst, dass die Halteelemente zur Anpassung ihrer Position und Ausrichtung an die Geometrie einer aufzunehmenden Federwindung oder eines aufzunehmenden Teils des Federdämpferbeines jeweils an einer Stellschiene drehbar und längs der jeweiligen Stellschiene verschiebbar gelagert sind, dass die Stellschienen an einem gemeinsamen Tragelement verstellbar gelagert sind, und dass das Tragelement an einem mit dem Stellglied verbundenen Lagerelement drehbar gelagert ist.

Weitere vorteilhafte Ausgestaltungen der Erfindung sind den weiteren Unteransprüchen entnehmbar.

Anhand der Zeichnung wird nachfolgend die Erfindung beispielhaft näher erläutert. Es zeigt:
- Fig. 1: eine perspektivische Explosionsdarstellung der Bauelemente eines Greiferelementes bzw. Stützelementes einer erfindungsgemäßen Vorrichtung;
- Fig. 2: die Bauelemente des Stützelementes aus Fig. 1 im montierten Zustand;
- Fig. 3: ein Ausführungsbeispiel eines Stellgliedes in perspektivischer Explosionsdarstellung, bestehend aus einem Führungsrohr sowie den Bestandteilen eines Spindeltriebes;
- Fig. 4: den unteren Endabschnitt des Führungsrohres aus Fig. 3 sowie den montierten Spindeltrieb und die am unteren Ende des Führungsrohres anordenbaren Lagerelemente für den Spindeltrieb;
- Fig. 5: das Stellglied aus den Fig. 3 und 4 im fertig montierten Zustand im Vertikalschnitt;
- Fig. 6: eine perspektivische Darstellung einer Haltevorrichtung zur ortsfesten Montage der erfindungsgemäßen Vorrichtung aus den vorangegangenen Figuren;
- Fig. 7: die Haltevorrichtung aus Fig. 6 in einer als Einspannvorrichtung ausgebildeten Ausführungsform im teilweise montierten Zustand in perspektivischer Darstellung;
- Fig. 8: einen Vertikalschnitt des unteren Endbereiches des Stellgliedes aus Fig. 5 mit einem Teilschnitt der am Stellglied feststehend montierten Einspannvorrichtung;
- Fig. 9: eine Draufsicht auf die Einspannvorrichtung aus Fig. 7 in einer geöffneten Stellung mit einem einzuspannenden Dämpferrohr eines Federdämpferbeines;
- Fig. 10: die Einspannvorrichtung aus Fig. 9 in einer halb geschlossenen Zwischenposition in Draufsicht;
- Fig. 11: die Einspannvorrichtung aus den Fig. 9 und 10 in der Endposition mit dem eingespannten Dämpferrohr;
- Fig. 12: einen perspektivischen Teilschnitt einer an der Einspannvorrichtung aus den Fig. 7 bis 11 anordenbaren Stützvorrichtung;
- Fig. 13: einen vertikalen Teilschnitt einer vollständig montierten erfindungsgemäßen Vorrichtung mit einem aufgenommenen Federdämpferbein in Phantomlinien.

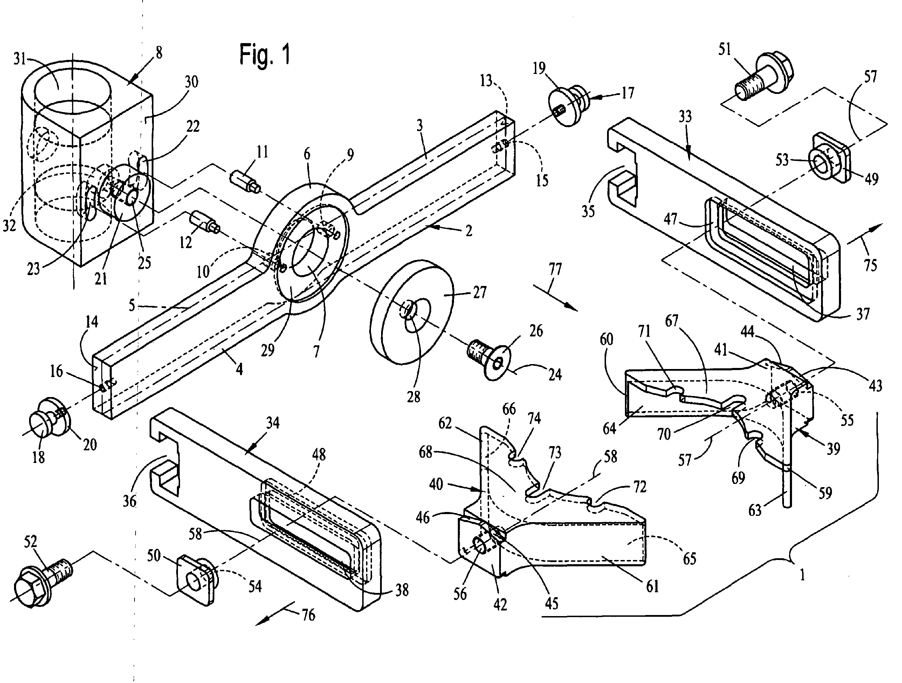

Fig. 1 zeigt eine perspektivische Explosionsdarstellung eines Stützelementes 1, welches mehrteilig ausgebildet ist. So weist das Stützelement 1 ein Tragelement 2 auf, welches zwei fluchtend zueinander angeordnete, seitlich nach außen stehende Tragschienen 3 und 4 bildet. Diese Tragschienen 3 und 4 weisen beim vorliegenden Ausführungsbeispiel jeweils einen rechteckigen Querschnitt auf, mit welchem die Tragschienen 3 und 4 in einer gemeinsamen Vertikalebene 5 liegen.

Die Tragschienen 3 und 4 sind über einen zentralen Zylinderabschnitt 6 einstückig miteinander verbunden. Im Bereich dieses Zylinderabschnittes 6 ist eine zentrale Lagerbohrung 7 vorgesehen, über welche das Tragelement 2 drehbar an einem Lagerelement 8 ansetzbar ist. Weiter sind im radial äußeren Umgebungsbereich der Lagerbohrung 7 zwei abgesetzte Steckbohrungen 9 und 10 vorgesehen, in welche jeweils ein Anschlagstift 11 bzw. 12 festsitzend einsteckbar ist. Durch den erweitert ausgebildeten Zylinderabschnitt 6 ist insbesondere eine erhöhte Stabilität des Tragelementes trotz dessen "Schwächung durch die Lagerbohrung 7 erreichbar.

Die äußeren Stirnseiten 13 und 14 der beiden Tragschienen 3 und 4 sind jeweils mit einem Sacklochgewinde 15 bzw. 16 versehen. In jedes dieser Sacklochgewinde 15 bzw. 16 ist jeweils eine Anschlagschraube 17 bzw. 18 einschraubbar, welche jeweils einen radial erweiterten Anschlagbund 19 bzw. 20 aufweist. Der Durchmesser dieser Anschlagbünde 19 und 20 ist jeweils größer als die Breite der zugehörigen Tragschiene 3 bzw. 4. Anstatt solcher Anschlagschrauben 17 und 18 kann auch jeder andere abnehmbare Anschlag vorgesehen sein.

Aus Fig. 1 ist des Weiteren ersichtlich, dass zur begrenzt schwenkbaren Lagerung des Tragelementes 2 am Lagerelement 8 das Lagerelement 8 einen zylindrischen Lagerzapfen 21 aufweist, auf welchen das Tragelement 2 mit seiner Lagerbohrung 7 aufsteckbar ist. Im Umgebungsbereich dieses Lagerzapfens 21 sind zwei sich diametral gegenüberliegende, bogenförmig konzentrisch zum Lagerzapfen 21 verlaufende Stellschlitze 22 und 23 vorgesehen, in welche die beiden Anschlagstifte 11 und 12 im montierten Zustand eingreifen. Durch diese Stellschlitze 22 und 23 wird im Zusammenwirken mit den Anschlagstiften 11 und 12 der mögliche Schwenkwinkel um die Schwenkachse 24 des Lagerzapfens 21 definiert begrenzt. Dies ist insbesondere bei der Handhabung der erfindungsgemäßen Vorrichtung von Vorteil.

Der Lagerzapfen 21 weist eine zentrale Gewindebohrung 25 auf, in welche eine entsprechende Montageschraube 26 einschraubbar ist. Mittels dieser Montageschraube 26 ist das Tragelement 2 axial feststehend und schwenkbar mit dem Lagerzapfen 21 in Eingriff bringbar. Zur axialen Festlegung des Tragelementes 2 am Lagerzapfen 21 ist beim vorliegenden Ausführungsbeispiel eine Lagerscheibe 27 vorgesehen, welche zum Hindurchstecken der Montageschraube 26 eine entsprechende zentrale Durchgangsbohrung 28 aufweist. Zur teilweisen Aufnahme der Lagerscheibe 27 kann das Tragelement 2 im Bereich seines Zylinderabschnittes 6 beispielsweise mit einer entsprechenden zylindrischen Vertiefung 29 versehen sein, welche koaxial zur Lagerbohrung 7 außenseitig am Tragelement 2 angeordnet ist. Eine solche Vertiefung 29 ist nicht zwingend notwendig. Durch diese Art der Festlegung des Tragelementes 2 am Lagerelement 8 wird jedoch eine äußerst gute Führung des Tragelementes 2 erreicht. Des Weiteren ist aus der Zeichnung erkennbar, dass die Lagerbohrung und der Lagerzapfen einen relativ großen Durchmesser aufweisen, wodurch auch bei höheren Presskräften beim Spannen einer Schraubenfeder relativ geringe Flächenpressungen erreichbar sind, was wiederum die Lebensdauer sowohl des Tragelementes 2 als auch des Lagerzapfens 21 erheblich erhöht.

Im Umgebungsbereich seines Lagerzapfens 21 weist das Lagerelement 8 eine ebene Stützfläche 30 auf, an welcher sich das Tragelement 2 im montierten Zustand axial abstützt. Um das Lagerelement 8 beispielsweise mit einem Führungsrohr eines Stellgliedes verstellbar (oder feststehend, je nach Ausgestaltung des Stellgliedes) in Eingriff bringen zu können, weist das Lagerelement 8 eine vertikal ausgerichtete Durchgangsbohrung 31 auf, mit welcher das Lagerelement 8 entsprechend auf ein solches Führungsrohr eines Stellgliedes passend aufschiebbar oder aufsetzbar ist.

Des Weiteren ist aus Fig. 1 ersichtlich, dass im Bereich der Gewindebohrung 25 eine zur Durchgangsbohrung 31 hin offene, radial erweiterte Senkbohrung 32 vorgesehen ist. Dies Ausgestaltung ist vorgesehen, wenn das Lagerelement 8 verstellbar auf einem Stellglied angeordnet werden soll. In einem solchen Fall steht das Lagerelement 8 im Betrieb über diese Senkbohrung 32 mit einem Kupplungsfinger einer Stellmutter eines Stellgliedes in Wirkverbindung, wie unten noch näher erläutert wird.

Die beiden Tragschienen 3 und 4 dienen zur verstellbaren Aufnahme jeweils einer Stellschiene 33 bzw. 34. Hierzu weist jede der Stellschienen 33 bzw. 34 in ihrem zur jeweiligen Tragschiene 3 bzw. 4 hin gerichteten Endbereich eine(n) T-förmig ausgebildete(n) Stellnut (oder Stelldurchbruch) 35 bzw. 36 auf. Bei abgenommenen Anschlagschrauben 17 und 18 ist somit jede der Stellschienen 33 bzw. 34 mit ihrer jeweiligen Stellnut 35 bzw. 36 von der jeweiligen Stirnseite 13 bzw. 14 her auf die zugeordnete Tragschiene 3 bzw. 4 aufschiebbar. Anschließend werden die beiden Anschlagschrauben 17 und 18 in das jeweils zugehörige Sacklochgewinde 15 bzw. 16 eingeschraubt, so dass jede der Stellschienen 33 und 34 unverlierbar an der jeweiligen Tragschiene 3 bzw. 4 gesichert ist.

Wie aus Fig. 1 weiter ersichtlich ist, weist jede der Stellschienen 34 bzw. 35 in ihrem der Stellnut 35 bzw. 36 gegenüberliegenden Endbereich jeweils einen mehrfach abgesetzten, sich etwa über die halbe Länge der jeweiligen Stellschiene 33 bzw. 34 erstreckenden Führungsschlitz 37 bzw. 38 auf. Diese Führungsschlitze 37 und 38 dienen zur verstellbaren Aufnahme jeweils eines Halteelementes 39 bzw. 40. Die beiden Halteelemente 39 und 40 sind beim vorliegenden Ausführungsbeispiel identisch aufgebaut und spiegelsymmetrisch zueinander, aufeinander zugerichtet an der jeweiligen Stellschiene 33 bzw. 34 anzuordnen.

Hierzu weist jedes der Halteelemente 39 bzw. 40 einen Kupplungsblock 41 bzw. 42 auf, mittels welchem das jeweilige Halteelement 39 bzw. 40 in den jeweiligen abgesetzten Führungsschlitz 37 bzw. 38 einsetzbar ist. Weiter ist aus Fig. 1 ersichtlich, dass die beiden Kupplungsblöcke 41 und 42 oberseitig jeweils mit schräg geneigten, in einem stumpfen Winkel zueinander verlaufenden Anschlagflächen 43, 44 bzw. 45, 46 versehen sind.

Die beiden Kupplungsblöcke 41 und 42 sind mit ihren Anschlagflächen 43, 44 bzw. 45, 46 von den jeweils aneinander zugewandten Seiten der Stellschienen 33 und 34 her in eine erweiterte, umlaufende Einsenkung 47 bzw. 48 des jeweiligen Stellschlitzes 37 bzw. 38 einsetzbar. Durch die Anschlagflächen 44, 45 bzw. 46, 47 wird eine begrenzte Schwenkbarkeit der Halteelemente 39, 40 im jeweiligen Führungsschlitz 37 bzw. 38 erreicht. Zur entlang der Führungsschlitze 37 und 38 verstellbaren Montage und begrenzt drehbaren Aufnahme der Kupplungsblöcke 41 und 42 ist jeweils ein Gleitstein 49 bzw. 50 in Verbindung mit einer Halteschraube 51 bzw. 52 vorgesehen. Jede dieser Halteschraube ist durch eine entsprechende Durchgangsbohrung 53 bzw. 54 des jeweils zugehörigen Gleitsteines 49 bzw. 50 hindurch steckbar und in ein entsprechendes Sacklochgewinde 55 bzw. 56 des jeweils zugehörigen Kupplungsblockes 41 bzw. 42 einschraubbar.

Es ist erkennbar, dass die beiden Halteelemente 39 und 40 in den Führungsschlitzen 37 und 38 längs der Stellschienen 33 und 34 verstellbar sind. Durch die besondere Ausgestaltung der Kupplungsblöcke 41 und 42 mit ihren Anschlagflächen 43, 44 und 45, 46 wird gleichzeitig zu dieser längs verschiebbaren Aufnahme in den Stellschlitzen 37 und 38 eine begrenzte Schwenkbarkeit beider Halteelemente 39 bzw. 40 um die jeweilige Längsmittelachse 57 bzw. 58 der beiden Sacklochgewinde 55 und 56 erreicht. Durch diese Ausgestaltung sind die Halteelemente 39 und 40 in ihrer Position beispielsweise der jeweils vorliegenden Steigung einer Federwindung einer zu spannenden Schraubenfeder in einfacher Weise anpassbar.

Weiter ist aus Fig. 1 ersichtlich, dass die Halteelemente 39 und 40 beim vorliegenden Ausführungsbeispiel V-förmig ausgebildet sind und jeweils zwei V-Schenkel 59, 60 bzw. 61, 62 bilden. Diese V-Schenkel 59, 60 und 61, 62 weisen ein L-förmiges Profil auf und bilden einerseits eine vertikal nach unten ausgerichtete Führungswand 63, 64 bzw. 65, 66, welche über eine obere, horizontal verlaufende gemeinsame Stützwand 67 bzw. 68 miteinander in Verbindung stehen. Jede der Stützwände 67 bzw. 68 weist mehrere in ihrem freien Kantenbereich angeordnete Ausnehmungen 69, 70, 71 bzw. 72, 73, 74 auf. Mit diesen Ausnehmungen sind die Stützwände 67 und 68 der beiden Halteelemente 39 und 40 beispielsweise formschlüssig mit vertikal nach oben stehenden Montagebolzen, beispielsweise eines Lagerkopfes oder Drehlagers eines Federdämpferbeines in Eingriff bringbar. Durch die V-förmige Ausbildung der Haltelemente sind diese wahlweise sowohl an einer aufzunehmenden Federwindung einer Schraubenfeder als auch an einem Bauteil (Federteller, Stützlager usw.) eines Federdämpferbeines sicher ansetzbar. Durch ihren L-förmiges Profil wird des Weiteren ein Abrutschen eines derart aufgenommen Bauteils oder einer Federwindung sicher verhindert.

Die Formgebung der beiden T-förmigen Stellnuten 35 und 36 ist dabei der Querschnittsform der jeweils zugehörigen Tragschiene 3 bzw. 4 derart angepasst, dass die Stellschienen 33, 34 einerseits in einfacher Weise entlang der jeweils zugehörigen Tragschiene 3 bzw. 4 verschiebbar sind und andererseits bei einer Belastung in Richtung oder entgegen der Pfeile 75 bzw. 76 der Stellschienen 34, 35 im Bereich ihrer Führungsschlitze 37 und 38 an der jeweiligen Tragschiene 3 bzw. 4 verkanten. Damit wird sicher ausgeschlossen, dass die Halteelemente 39, 40 nicht ungewollt ihre zum Spannen einer Schraubenfeder eines Federdämpferbeines eingestellte Position verlassen können und somit ein Abrutschen sicher verhindert wird.

In ähnlicher Art und Weise ist auch die Formgebung der Führungsschlitze 37 und 38 mit ihren mehrfach ausgebildeten Absätzen im Zusammenwirken einerseits mit der Formgebung der Gleitsteine 49 und 50 und andererseits der Kupplungsblöcke 41 und 42 derart gewählt, dass die Kupplungsblöcke 41 und 42 und/oder die Gleitsteine bei einer Belastung der Halteelemente 39 und 40 im Bereich ihrer V-Schenkel 59, 60 bzw. 61, 62 in Richtung oder entgegen des Pfeiles 77 im Bereich der Führungsschlitzen 37 und 38 "verkanten" oder "verklemmen", so dass eine ungewollte Verstellung der Halteelemente 39 und 40 in den Führungsschlitzen 37 und 38 unter Belastung sicher ausgeschlossen ist. Auch durch diese Ausgestaltung wird ein Höchstmaß an Sicherheit für den Mechaniker erreicht.

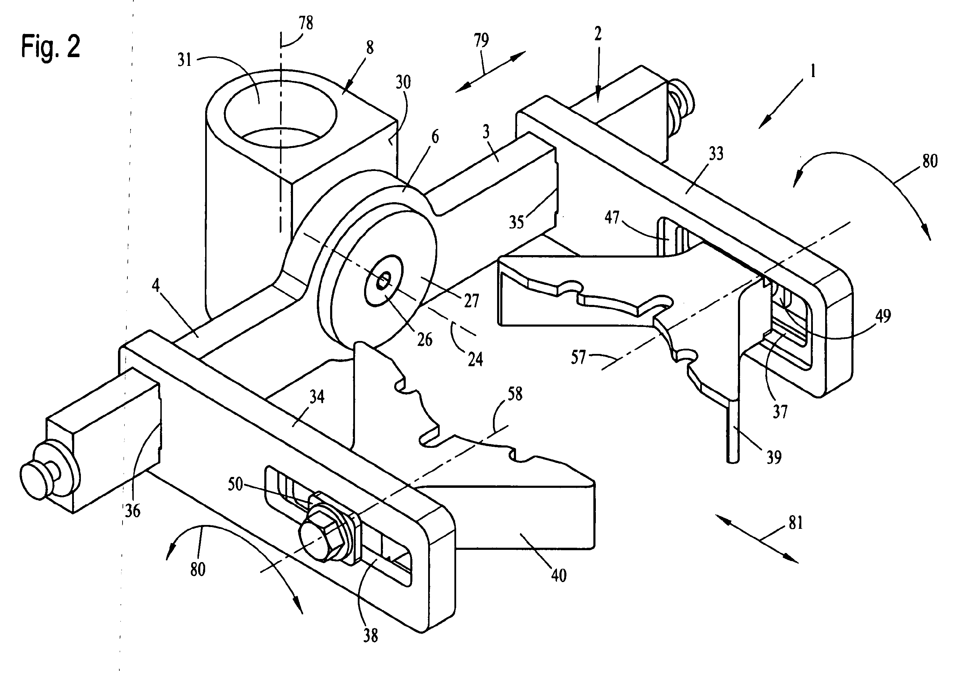

Fig. 2 zeigt das Stützelement 1 aus Fig. 1 in seinem montierten Zustand. Dabei sind die einzelnen Bauelemente in Fig. 2 in einer mittleren Ausgangsstellung zueinander dargestellt. So ist erkennbar, dass das Lagerelement 8 mit der Längsmittelachse 78 seiner Durchgangsbohrung 31 im Wesentlichen vertikal verläuft. Das Tragelement 2 ist in der dargestellten Mittelstellung mit seinen Tragschienen 3 und 4 etwa rechtwinklig zu dieser Längsmittelachse 78 ausgerichtet. Dabei ist erkennbar, dass das Tragelement 2 mit seinem Zylinderabschnitt 6 auf der ebenen Stützfläche 30 des Lagerelementes 8 flächig anliegt. Dabei wird, wie bereits zu Fig. 1 erwähnt, das Tragelement 2 über die Montageschraube 26 und die Lagerscheibe 27 unverlierbar und schwenkbar am Lagerelement 8 gehalten.

Dabei stehen, wie zu Fig. 1 erwähnt, die beiden sich mit dem Tragelement 2 mitdrehenden Anschlagstifte 11 und 12 mit den beiden Stellschlitzen 22 und 23 aus Fig. 1 des Lagerelementes 8 in Eingriff, so dass die Schwenkbewegung des Tragelementes 2 relativ zum Lagerelement 8 begrenzt ist. Eine solche Schwenkbegrenzung ist nicht zwingend vorzusehen, erleichtert jedoch die Handhabung des Stützelementes 1 beim Ansetzen an ein Federdämpferbein oder an eine Federwindung einer zu spannenden Schraubenfeder.

Die beiden Stellschienen 33 und 34 stehen über ihre beiden Stellnuten 35 und 36 formschlüssig und in Richtung des Doppelpfeiles 79 verstellbar mit den Tragschienen 3 und 4 in Eingriff. Insoweit sind die beiden Stellschienen 33 und 34 in ihrem Abstand auf die gegebenen geometrischen und räumlichen Bedingungen zum Ansetzen an ein Federdämpferbein oder an einer Federwindung einer zu spannenden Schraubenfeder auf deren jeweils vorliegenden Durchmesser anpassbar.

Die beiden Halteelemente 39 und 40 stehen mit dem jeweils abgesetzt ausgebildeten Führungsschlitz 37 bzw. 38 in Eingriff und sind in dieser Eingriffsposition durch die beiden Gleitsteine 49 und 50 gesichert. Dabei ist aus Fig. 2 für das Halteelement 39 ersichtlich, dass dieses mit der Einsenkung 47 des Führungsschlitzes 37 in Eingriff steht. Dabei sind beide Halteelemente 39 und 40 um die jeweilige Längsmittelachse 57 bzw. 58 ihrer jeweiligen, in Fig. 2 nicht erkennbaren, Sacklochgewinde aus der in Fig. 2 dargestellten horizontalen Ausgangslage in Richtung des Doppelpfeiles 80 unabhängig voneinander drehbar im Führungsschlitz 37 bzw. 38 aufgenommen. Diese Drehbarkeit ist in ihrem maximalen Drehwinkel durch die aus Fig. 1 ersichtlichen Anschlagflächen 43, 44 bzw. 45, 46 begrenzt. Durch diese schwenkbare Anordnung der Halteelement 39 und 40 sind diese an entsprechend unterschiedliche Steigungen einer aufzunehmenden Federwindung, eines aufzunehmenden Federtellers oder eines Drehlagerkopfes eines Federdämpferbeines in einfacher Weise anpassbar.

Desweiteren wird durch die Verstellbarkeit der beiden Halteelemente 39 und 40 in Richtung des Doppelpfeiles 81 auch eine Anpassbarkeit in Bezug auf den Abstand der Halteelemente 39 und 40 zum Lagerelement 8 und damit zu einem mit diesem Lagerelement 8 in Wirkverbindung stehenden Stellglied erreicht. D.h., dass der Abstand der Halteelemente 39 und 40 bezüglich eines solchen Stellgliedes den jeweiligen Erfordernissen einfach anpassbar ist. Dieses in den Fig. 1 und 2 beispielhaft dargestellte Stützelement 1 dient beim vorliegenden Ausführungsbeispiel vorzugsweise zur Aufnahme des oberen, drehbaren Stützlagers oder des oberen Federtellers oder einer Federwindung im oberen Endbereich eines Federdämpferbeines.

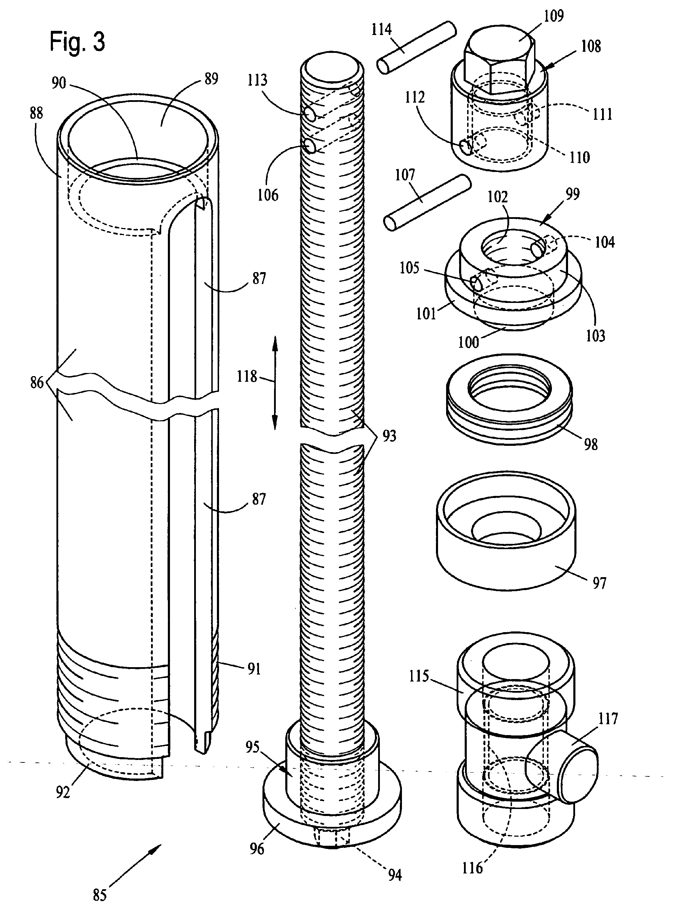

Um nun eine solche Schraubenfeder, sei es über das obere Drehlager, den oberen Federteller oder eine Federwindung der Schraubenfeder spannen zu können, ist dieses Stützelement 1 mit einem Stellglied 85 in Eingriff bringbar, welches beispielhaft in Fig. 3 in perspektivischer Explosionsdarstellung dargestellt ist.

Dieses Stellglied 85 weist beim dargestellten Ausführungsbeispiel als zentralen Bestandteil ein Führungsrohr 86 auf, welches mit einem nach unten offenen Stellschlitz 87 versehen ist. Dieser Stellschlitz 87 erstreckt sich annähernd über die gesamte vertikale Länge des Führungsrohres 86 und endet in dessen oberem Endbereich 88. In diesem oberen Endbereich 88 weist das Führungsrohr 86 einen radial erweiterten, zylindrischen Aufnahmeabschnitt 89 auf. Die axiale Tiefe dieses Aufnahmeabschnittes 89 wird durch eine Anschlagschulter 90 begrenzt, welche sich in Umfangsrichtung beidseitig bis zum Stellschlitz 87 des Führungsrohres 86 erstreckt. In seinem unteren Endbereich weist das Führungsrohr 86 ein Außengewinde 91 auf, an welches sich nach unten hin ein radial verjüngt ausgebildeter Zentrierabschnitt 92 anschließt.

In das Führungsrohr 86 ist eine Stellspindel 93 von unten einsetzbar, welche in ihrem unteren Endbereich mit einem Antriebssechskant 94 versehen ist. Im Endbereich des Antriebssechskantes 94 ist auf die Stellspindel 93 eine Stützhülse 95 aufgeschraubt und in der dargestellten Position beispielsweise mit der Stellspindel 93 verschweißt. Diese Stützhülse 95 weist in ihrem axial unteren Endbereich einen radial erweiterten Stützbund 96 auf, über welchen sich die Stellspindel 93 im Betrieb axial an einem Axialdrucklager abstützt, wie später noch näher erläutert wird.

Zur Lagerung der in das Führungsrohr 86 eingesetzten Stellspindel 93 ist in deren oberem Endbereich ein abgesetzter Stützring 97 vorgesehen, welcher in den Aufnahmeabschnitt 89 des oberen Endbereiches 88 des Führungsrohres 86 passend einsetzbar ist.

Dieser Stützring 97 dient zur Aufnahme eines Axialdrucklagers 98, welches im montierten Zustand ebenfalls versenkt im Aufnahmeabschnitt 89 des Führungsrohres 86 angeordnet ist. Zur axialen Abstützung der Stellspindel 93 am Axialdrucklager 98 ist auf dieses ein Stützring 99 aufschraubbar. Dieser Stützring 99 weist zum Axialdrucklager 98 hin einen Zentrieransatz 100 auf, mit welchem der Stützring 99 passend in das Axialdrucklager 98 einsetzbar ist.

Des Weiteren bildet der Stützring 99 zur axialen Abstützung am Axialdrucklager 98 ebenfalls einen radial erweiterten Stützbund 101. Für die Montage auf dem oberen Ende der Stellspindel 93 weist dieser Stützring 99 ein durchgehendes Innengewinde 102 auf, mit welchem der Stützring 99 auf die Stellspindel 93 aufschraubbar ist. Dabei ist der Stützring 99 oberhalb seines Stützbundes 101 mit einem radial verjüngten, zylindrischen Montageabschnitt 103 versehen. Im axialen Bereich dieses Montageabschnittes 103 sind zwei sich diametral gegenüberliegende, zueinander fluchtende, radial verlaufende Durchgangsbohrungen 104 und 105 vorgesehen. Dabei ist den beiden Durchgangsbohrungen 104 und 105 eine unterhalb des oberen Endes der Stellspindel 93 angeordnete Querbohrung 106 der Stellspindel 93 zugeordnet. Hierzu ist vorgesehen, dass nach entsprechender Positionierung des Stützringes 99 auf der Stellspindel der Stützring 99 über einen entsprechenden Sicherungsstift 107 in seiner Position sicherbar ist, wobei der Sicherungsstift 107 im montierten Zustand die aufeinander ausgerichteten Durchgangsbohrungen 104 und 105 sowie die Querbohrung 106 durchragt.

Zur Betätigung der Stellspindel 93 ist auf diese ein Antriebskopf 108 aufschraubbar, welcher in seinem oberen Endbereich einen Antriebssechskant 109 aufweist. Dieser Antriebskopf 108 weist ein zentrales, nach unten offenes Innengewinde 110 auf, in dessen Bereich ebenfalls zwei zueinander fluchtende, sich diametral gegenüberliegende Durchgangsbohrungen 111 und 112 vorgesehen sind. Mit diesem Innengewinde 110 ist der Antriebskopf 108 oberhalb des bereits aufgeschraubten Stützringes 99 auf das axial aus dem Stützring 99 herausragende Ende der Stellspindel 93 aufschraubbar. In seinem fertig montierten Zustand ist dabei der Antriebskopf 108 mit seinen beiden Durchgangsbohrungen 111 und 112 auf eine oberhalb der Querbohrung 106 angeordnete zweite Querbohrung 113 der Stellspindel 93 ausrichtbar. In dieser ausgerichteten Position kann zur Drehsicherung des Antriebskopfes 108 ebenfalls ein Sicherungsstift 114 vorgesehen sein.

Des Weiteren ist aus Fig. 3 eine Stellmutter 115 ersichtlich, welche ein durchgehendes Innengewinde 116 aufweist. Mit diesem Innengewinde 116 ist die Stellmutter 115 - bevor der Stützring 99 und der Antriebskopf 108 auf der Stellspindel 93 montiert wurden - auf die Stellspindel 93 aufschraubbar. Diese Stellmutter 115 weist einen radial vorstehenden, etwa axial mittig angeordneten Kupplungsfinger 117 auf, welcher im montierten Zustand des Stützelementes 1 am Stellglied 85 in die Senkbohrung 32 des Lagerelementes 8 formschlüssig eingreift. Dies bedeutet, dass bei einer Axialverstellung der Stellmutter 115 in Richtung des Doppelpfeiles 118 eine Stellbewegung des Lagerelementes 8 entlang des Führungsrohres 86 erfolgt.

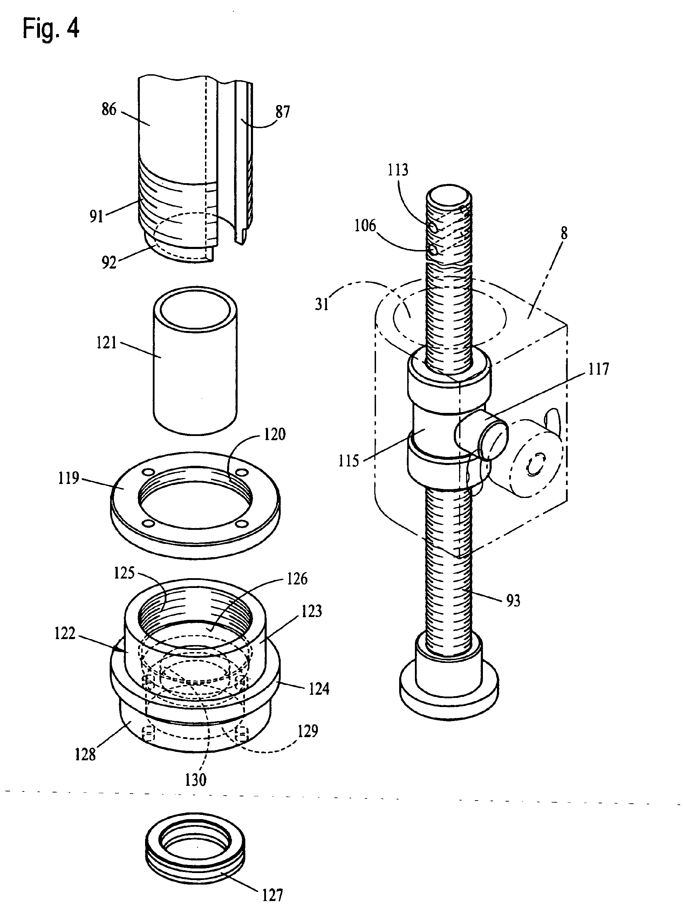

Das aus Fig. 3 ersichtliche Außengewinde 91 kann beim vorliegenden Ausführungsbeispiel zur Montage unterschiedlicher Bauteile dienen. So kann hier beispielsweise eine Kopplung mit einem feststehenden, gabelförmigen oder klauenförmigen Greiferelement vorgesehen sein, wie dies bereits aus dem Stand der Technik bekannt ist. Für eine solche Kopplung mit einem solchen Greiferelement zeigt Fig. 4 den unteren Endbereich des Führungsrohres 86 mit seinem Außengewinde 91.

Auf das Außengewinde 91 ist ein Schraubring 119 mit einem entsprechenden Innengewinde 120 aufschraubbar. Zur Stabilisierung des Führungsrohres 86 im Bereich seines Außengewindes 91 kann hier eine Stützhülse 121 vorgesehen sein, welche in das Führungsrohr 86 von unten einsetzbar ist. Beim vorliegenden Ausführungsbeispiel gemäß der Fig. 4 ist nach dem Aufschrauben des Schraubringes 119 eine Lagerhülse 122 aufschraubbar. Diese Lagerhülse 122 weist zum Schraubring 119 hin einen radial verjüngten, zylindrischen Lagerabschnitt 123 auf, welcher beispielsweise zur Aufnahme bzw. Lagerung eines Greiferelementes der herkömmlichen Art dienen kann. Axial nach unten begrenzt ist dieser Lagerabschnitt 123 durch einen radial vorstehenden Stützbund 124, so dass ein entsprechend auf den Lagerabschnitt 123 aufgesetztes Greiferelement zwischen diesem Stützbund 124 und dem Schraubring 119 klemmend aufnehmbar ist.

Dabei weist die Lagerhülse 122 zum Aufschrauben auf das Außengewinde 91 ebenfalls ein Innengewinde 125 auf, dessen axiale Länge durch eine radial nach innen vorstehende Anschlagschulter 126 begrenzt ist. Durch diese Begrenzung der axialen Länge des Innengewindes 125 ist die Lagerhülse 122 stets in einer definierten axialen Position auf das Außengewinde 91 des Führungsrohres 86 aufschraubbar. Dabei stützt sich im montierten Zustand sowohl die Stützhülse 121 als auch der Zentrierabschnitt 92 des Führungsrohres 86 axial auf der Anschlagschulter 126 ab.

Des Weiteren ist die Lagerhülse 122 zur Aufnahme eines zweiten Axialdrucklagers 127 vorgesehen. Dazu bildet die Lagerhülse 122 unterhalb ihres Stützbundes 124 einen radial verjüngt ausgebildeten Aufnahmeabschnitt 128, welcher mit einer radial erweiterten Aufnahmebohrung 129 zur Aufnahme des Axialdrucklagers 127 versehen ist. Diese Aufnahmebohrung 129 ist unterhalb der Anschlagschulter 126 angeordnet, so dass zwischen der Aufnahmebohrung 129 und dem Innengewinde 125 ein radial nach innen vorstehender, umlaufender Stützsteg 130 gebildet wird.

Zur Montage der in Fig. 4 ebenfalls dargestellten Stellspindel 93 wird diese zunächst von unten nach oben durch das Axialdrucklager 127, die Lagerhülse 122 sowie die Stützhülse 121 hindurch gesteckt. Anschließend wird die aus Fig. 4 ebenfalls ersichtliche Stellmutter 115 auf die Stellspindel 93 aufgeschraubt und in eine untere Stellung gebracht, wie dies aus Fig. 4 erkennbar ist. Anschließend kann nun das in Fig. 4 in Phantomlinien dargestellte Lagerelement 8 von oben auf die Stellspindel 93 und auch auf die Stellmutter 115 aufgesetzt und mit dem Kupplungsfinger 117 der Stellmutter 115 formschlüssig in Eingriff gebracht werden. Danach wird die Stellspindel 93 von unten in das Führungsrohr 86 zusammen mit den aufgesetzten Bauteilen aufgeschoben, so dass während des Aufschiebens die Stellmutter 115 mit ihrem Kupplungsfinger 117 in den Stellschlitz 87 des Führungsrohres 86 gelangt. Gleichzeitig wird das Lagerelement 8 mit seiner Durchgangsbohrung 31 auf das Führungsrohr 86 aufgeschoben. Zuvor wurde der Schraubring 119 auf das Außengewinde 91 des Führungsrohres 86 aufgeschraubt.

Nach Erreichen einer entsprechenden Einschubtiefe ist nun auch die Lagerhülse 122 auf das Außengewinde 91 des Führungsrohres 86 aufschraubbar. Die Länge der Stellspindel 93 ist dabei so bemessen, dass diese mit ihrem oberen Endabschnitt, in welchem die beiden Querbohrungen 106 und 113 angeordnet sind, axial nach oben aus dem Führungsrohr 86 herausragt, so dass sowohl der Stützring 99 als auch der Antriebskopf 108, wie zu Fig. 3 beschrieben, montierbar sind.

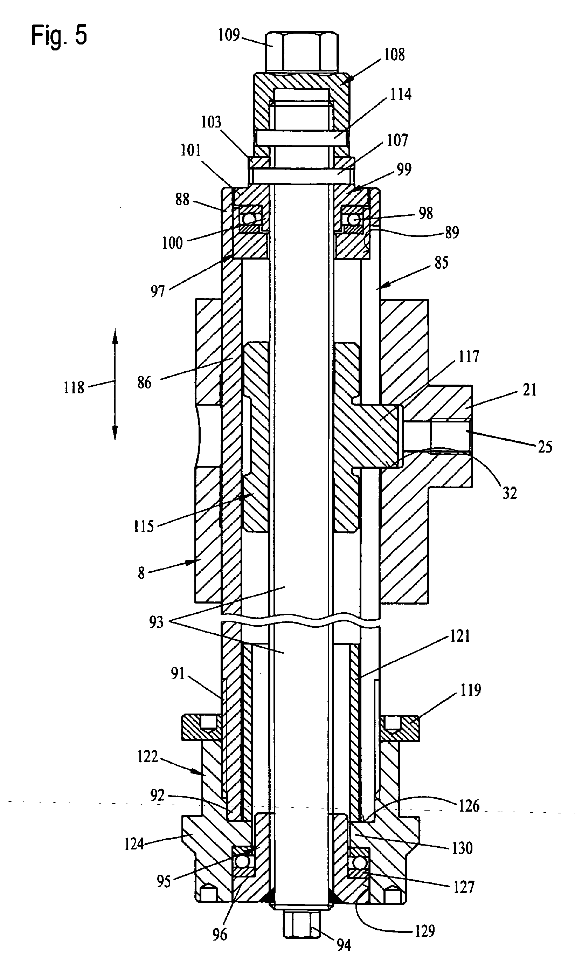

Fig. 5 zeigt einen solchen fertig montierten Zustand des Stellgliedes 85. Es ist erkennbar, dass im Bereich des unteren Außengewindes 91 des Führungsrohres 86 die Stützhülse 121 in das Führungsrohr 86 eingesetzt ist und sich axial nach unten an der Anschlagschulter 126 des radial nach innen gerichteten Stützsteges 130 abstützt. Der Schraubring 119 ist auf das Außengewinde 91 zusammen mit der Lagerhülse 122 aufgeschraubt. Dabei stützt sich das Führungsrohr 86 in diesem vollständig aufgeschraubten Zustand der Lagerhülse 122 auf dem Außengewinde 91 ebenfalls auf der Anschlagschulter 126 mit seinem Zentrierabschnitt 92 ab. Von dem abgesehen, dass die Stützhülse 121 einerseits zur Stabilisierung des Führungsrohres 86 im Bereich des Außengewindes 91 dient, ist diese Stützhülse 121 auch als Hubbegrenzung für die innerhalb des Führungsrohres 86 geführte Stellmutter 115 vorgesehen.

Weiter ist aus Fig. 5 erkennbar, dass das Axialdrucklager 127 in der radial erweiterten Aufnahmebohrung 129 aufgenommen ist. Dabei durchragt die Stützhülse 95 das Axialdrucklager 127 sowie den Stützsteg 130 der Lagerhülse 122. Aus Fig. 5 ist weiter erkennbar, dass die Stützhülse 95 auf das untere Ende der Stellspindel 93 aufgeschraubt und mit dieser feststehend verschweißt ist. Mit ihrem radial erweiterten Stützbund 96 stützt sich dabei die Stützhülse 95 axial am Axialdrucklager 127 ab. In diesem montierten Zustand überragt der untere Antriebssechskant 94 der Stellspindel 93 sowohl die Stützhülse 95 als auch die Lagerhülse 122, so dass dieser Antriebssechskant 94 frei von außen für den Antrieb der Stellspindel 93 zugänglich ist. Dieser Antriebssechskant 94 dient insbesondere auch als Hilfsantrieb für den Fall, dass der Sicherungsstift 114 des Antriebskopfes 108 bei Überlast abgeschert wird.

Weiter ist aus Fig. 5 ersichtlich, dass die Stellmutter 115 mit ihrem radial vorstehenden Radialfinger 117 in die innere Senkbohrung 32 des Lagerelementes 8 formschlüssig eingreift, so dass bei einer Stellbewegung die Stellmutter 115 in Richtung des Doppelpfeiles 118 mitbewegt wird. In Fig. 5 ist weiter der Lagerzapfen 21 mit seiner Gewindebohrung 25 erkennbar, welcher, wie bereits zu den Fig. 1 und 2 beschrieben, zur schwenkbaren Aufnahme des Tragelementes 2 dient. Dieses Tragelement 2 sowie die restlichen Bauelemente des Stützelementes 1 sind in Fig. 5 der Übersichtlichkeit halber nicht dargestellt.

Die Länge der Stellspindel 93 ist derart ausgebildet, dass diese über das obere Ende 88 des Führungsrohres 86 hinausragt. In den Aufnahmeabschnitt 89 des Führungsrohres 86 ist der Stützring 97 eingesetzt, welcher wiederum das obere Axialdrucklager 98 aufnimmt. In diesem montierten Zustand ragt der Stützring 99 mit seinem unteren Zentrieransatz 100 in das Axialdrucklager 98 hinein, so dass dieser konzentrisch zusammen mit der Stellspindel 93 im Führungsrohr 86 aufgenommen ist. Es ist erkennbar, dass sich der Stützring 99 mit seinem radial erweiterten Stützbund 101 axial am Axialdrucklager 98 abstützt. Dabei ist im axial nach außen vorstehenden Montageabschnitt 103 des Stützringes 99 der Sicherungsstift 107 eingesetzt, welcher sowohl den Montageabschnitt 103 als auch die Stellspindel 93 durchragt.

Oberhalb des Stützringes 99 ist der Antriebskopf 108 aufgesetzt und mittels des zweiten Sicherungsstiftes 114 in der dargestellten Position gesichert. Dabei durchragt dieser Sicherungsstift 114 sowohl den Antriebskopf 108 als auch die Stellspindel 93, so dass der Antriebskopf 108 feststehend mit der Stellspindel 93 in Verbindung steht. Dieser Sicherungsstift 114 fungiert beim dargestellten Ausführungsbeispiel des Stellgliedes 85 als Überlastsicherung und wird bei Überlastung, beispielsweise durch Antrieb der Stellspindel 93 mittels eines Schlagschraubers, entsprechend abgeschert, so dass eine Beschädigung der Stellspindel 93 oder der Stellmutter 115 durch Überlastung sicher verhindert wird. Auch der Antriebssechskant 109 des Antriebskopfes 108 ist von außen frei zugänglich, wie dies aus Fig. 5 erkennbar ist.

Es ist leicht vorstellbar, dass zwischen dem Schraubring 119 und dem radial erweiterten Stützbund 124 der Lagerhülse 122 beispielsweise ein Greiferelement, wie diese bei Federspannern aus dem Stand der Technik bekannt sind, aufnehmbar ist. Ein solches Greiferelement ist allerdings der Übersichtlichkeit halber in Fig. 5 nicht explizit dargestellt. Bei Verwendung des beispielshaft dargestellten Stellgliedes 85 kann dieses zur einfacheren Handhabung, insbesondere des Stützelementes 1, feststehend, beispielsweise in einen Schraubstock od. dgl., eingespannt sein.

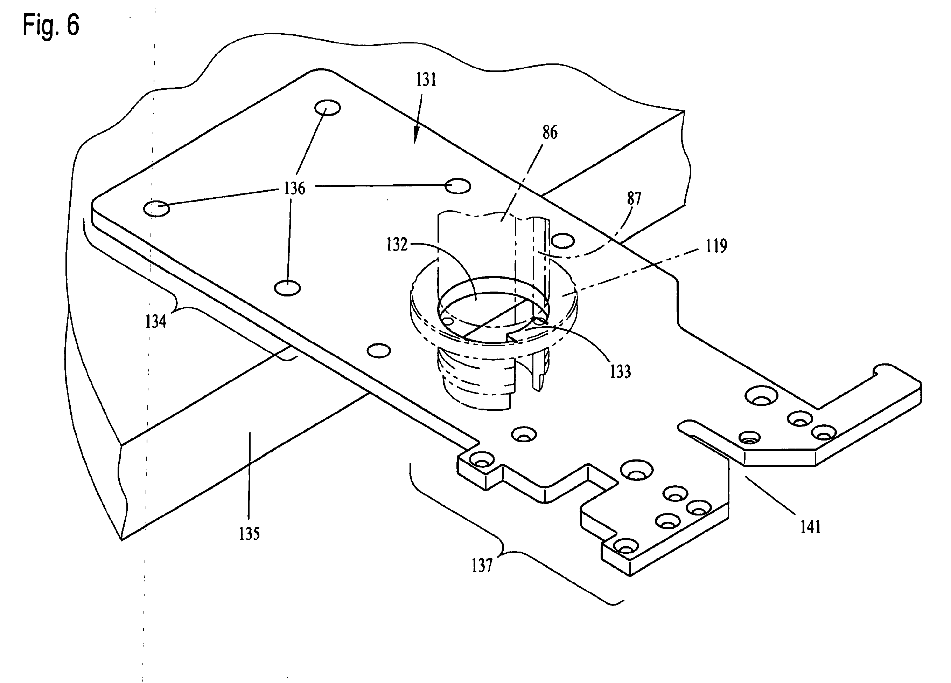

Beim vorliegenden Ausführungsbeispiel ist jedoch zur feststehenden stationären Verwendung des Stellgliedes 85 zusammen mit dem Stützelement 1 eine Halteplatte 131 vorgesehen, wie diese beispielhaft in Fig. 6 perspektivisch dargestellt ist. Diese Halteplatte 131 weist eine zentrale Aufnahmebohrung 132 auf, in welche das Führungsrohr 86 nach dem der Schraubring 119 aufgeschraubt wurde, einsteckbar ist. Dabei ist vorgesehen, dass diese Aufnahmebohrung 132 mit einer radial nach innen gerichteten Führungszunge 133 versehen ist. Diese Führungszunge 133 greift im montierten Zustand des Führungsrohres 86 in den Stellschlitz 87 des Führungsrohres 86 passend ein. Damit wird das Führungsrohr 86, welches in Fig. 6 in Phantomlinien zusammen mit dem Schraubring 119 dargestellt ist, verdrehsicher und rechtwinklig zur Halteplatte 131 verlaufend von dieser aufgenommen.

Weiter bildet die Halteplatte 131 einen rückwärtigen Montageabschnitt 134, mittels welchem die Halteplatte 131 beispielsweise auf der Arbeitsplatte 135 feststehend montierbar ist. Hierzu weist dieser Montageabschnitt 134 beim vorliegenden Ausführungsbeispiel insgesamt vier Durchgangsbohrungen 136 auf.

Somit ist das Stellglied 85 über sein Führungsrohr 86 in einfachster Weise feststehend auf der Arbeitsplatte 135 montierbar, so dass die Handhabung sehr vereinfacht wird. Zur feststehenden Halterung des Führungsrohres 86 an der Halteplatte 131 dient wiederum die Lagerhülse 122, welche unterseitig gegen die Halteplatte 131 geschraubt wird (in der Zeichnung nicht dargestellt).

Beim vorliegenden Ausführungsbeispiel bildet diese Halteplatte 131 mit ihrem von der Arbeitsplatte 135 bzw. vom Montageabschnitt 134 abgewandten Plattenabschnitt 137 einen Teil einer Einspannvorrichtung, in welcher ein Dämpferrohr eines Federdämpferbeines feststehend und klemmend nach Art eines Schraubstockes aufnehmbar ist. Diese Einspannvorrichtung ersetzt somit ein herkömmliches Greiferelement und bildet beim vorliegenden Ausführungsbeispiel das zweite Stützelement.

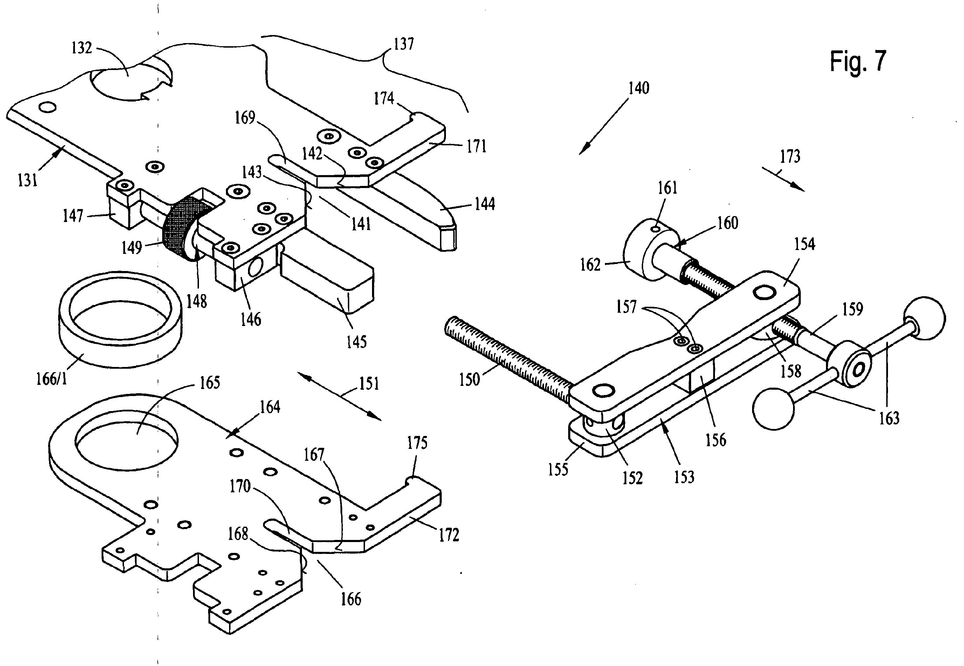

Die Bauelemente der Einspannvorrichtung 140 sind in Fig. 7 in teilweise perspektivischer Explosionsdarstellung gezeigt. Dabei ist in Fig. 7 von der Halteplatte 131 lediglich der vordere Plattenabschnitt 137 dargestellt. Es ist erkennbar, dass der Plattenabschnitt 137 zur vorderen Stirnseite hin eine V-förmige Ausnehmung 141 aufweist, deren V-Schenkel 142 und 143 beim vorliegenden Ausführungsbeispiel unter einem Winkel von 90° zueinander verlaufen. Durch diese Ausgestaltung sind Dämpferrohre unterschiedlichen Durchmessers stets präzise aufnehmbar. Um ein Dämpferrohr einfacher in den Bereich dieser beiden V-Schenkel 142 und 143 bringen zu können, sind seitlich neben dieser V-förmigen Ausnehmung 141 zwei Führungsschenkel 144 und 145 vorgesehen. Durch diese beiden Führungsschenkel 144 und 145 wird des Weiteren auch ein im Bereich der V-förmigen Ausnehmung 141 eingestelltes Dämpferrohr gegen seitliches Abkippen gesichert, wodurch die Handhabung erheblich erleichtert wird.

Im vorderen seitlichen Bereich weist der Plattenabschnitt 137 unterseitig zwei voneinander beabstandete Lagerelemente 146 und 147 auf, zwischen welchen eine Einstellmutter 148 drehbar und axial unverschiebbar aufgenommen ist. Diese Einstellmutter 148 weist einen radial erweiterten Rändelbund 149 auf, über welchen die Einstellmutter 148 manuell drehbar ist. Mit dieser Einstellmutter 148 ist eine Einstellspindel 150 in Eingriff bringbar. Durch entsprechendes Drehen der Einstellmutter 148 ist somit die Einstellspindel 150 in Richtung des Doppelpfeiles 151 variabel verstellbar.

Die Einstellspindel 150 weist in ihrem, der Einstellmutter 148 gegenüberliegenden Endbereich einen Lagerkopf 152 auf, an welchem ein Presshebel 153 schwenkbar gelagert ist. Somit läßt sich durch Betätigen der Einstellmutter 148 der Abstand dieses Presshebels 153 variabel zur V-förmigen Ausnehmung 141 des Plattenabschnittes 137 einstellen.

Der Presshebel 153 wird beim vorliegenden Ausführungsbeispiel durch eine obere Klemmplatte 154 und eine untere Klemmplatte 155 gebildet. Die beiden Klemmplatten 154 und 155 sind über einen Abstandshalter 156 miteinander verbunden, wobei hierzu zwei Montageschrauben 157 vorgesehen sind.

Zwischen den beiden Klemmplatten 154 und 155 wird in deren dem Lagerkopf 152 gegenüberliegenden Endbereich, eine Stellmutter 158 schwenkbar aufgenommen. Durch diese Stellmutter 158 ist eine Zugspindel 159 hindurch geschraubt, welche an ihrem, zum Plattenabschnitt 137 hin liegenden Ende mit einer Zughülse 160 versehen ist. Diese Zughülse 160 ist auf die Zugspindel 159 aufgeschraubt und beispielsweise mittels eines quer verlaufenden Sicherungsstiftes 161 unverlierbar gesichert. Diese Zughülse 160 weist an ihrem freien Ende einen radial erweiterten Bundsteg 162 auf, dessen Funktion später noch näher erläutert wird.

In ihrem, diesem Bundsteg 162 gegenüberliegenden Endbereich ist die Zugspindel 159 mit zwei sich diametral gegenüberliegenden und quer zur Zugspindel 159 verlaufenden Betätigungshebeln 163 versehen.

Desweiteren ist aus Fig. 7 ersichtlich, dass dem Plattenabschnitt 137 eine Stützplatte 164 zugeordnet ist. Diese Stützplatte 164 weist etwa im Bereich der Aufnahmebohrung 132 der Halteplatte 131 ebenfalls eine Durchgangsbohrung 165 auf. Mit dieser Durchgangsbohrung 165 ist die Stützplatte 164 im montierten Zustand auf den oberen Lagerabschnitt 123 (siehe Fig. 4) der Lagerhülse 122 passend aufsetzbar. Um einen vorbestimmten Abstand, welcher der Höhe der beiden Lagerelemente 146 und 147 entspricht, zur Halteplatte 131 zu gewährleisten, ist zwischen der Halteplatte 131 und der Stützplatte 164 ein Distanzring 166/1 vorgesehen, welcher im montierten Zustand ebenfalls auf den oberen Lagerabschnitt 123 der Lagerhülse 122 aus Fig. 4 aufsetzbar ist. Im fertig montierten Zustand ist die Stützplatte 164 unterseitig an den beiden Führungsschenkeln 144 und 145 sowie den beiden Lagerelementen 146 und 147 angeordnet. Dabei kann die Stützplatte 164 mit diesen Bauelementen verschraubt sein.

Die vordere Stirnseite der Stützplatte 164 ist identisch ausgebildet wie die vordere Stirnseite des Plattenabschnittes 137. So weist auch die Stützplatte 164 eine V-förmige Ausnehmung 166 auf, welche ebenfalls zwei unter 90° zueinander verlaufende V-Schenkel 167 und 168 bildet. Dabei ist die Formgebung identisch gewählt wie die Formgebung der V-förmigen Ausnehmung 141 des Plattenabschnittes 137. Durch diese Stützplatte 164 wird somit ein aufzunehmendes Dämpferrohr präzise vertikal zur Halteplatte 131 ausgerichtet, so dass dieses parallel zum Stellglied 85 bzw. dessen Führungsrohr 86 verläuft.

Weiter ist aus Fig. 7 ersichtlich, dass zwischen den V-Schenkeln 142, 143 des Plattenabschnittes 137 sowie zwischen den beiden V-Schenkeln 167 und 168 jeweils ein Aufnahmeschlitz 169 bzw. 170 vorgesehen ist. Diese Aufnahmeschlitze 169 und 170 dienen zur Aufnahme eines radial von einem Dämpferrohr vorstehenden Blechbauteils, welche bei manchen Konstruktionen von Federdämpferbeinen unmittelbar unterhalb des am Dämpferrohr feststehend angeordneten Federtellers vorgesehen sind. Durch diese Ausgestaltung ist ein Federdämpferbein mit seinem unteren Federteller auf dem Plattenabschnitt 137 bzw. den geschlossenen Presshebel 153 aufsetzbar, so dass insbesondere die während des Spannvorganges auftretenden Axialkräfte optimal über den Federteller auf die Einspannvorrichtung 140 übertragbar sind. Damit wird ebenfalls sicher verhindert, dass ein eingespanntes Dämpferrohr während des Spannvorganges axial "durchrutschen" kann.

Weiter ist aus Fig. 7 ersichtlich, dass sowohl der Plattenabschnitt 137 als auch die Stützplatte 164 seitlich den beiden Lagerelementen 146 und 147 gegenüberliegend jeweils eine seitlich vorstehende Stützlasche 171 bzw. 172 aufweist. Im unterseitig an den Führungsschenkeln 144, 145 und den Lagerelementen 146 und 147 montierten Zustand der Stützplatte 164, weisen die beiden Stützlaschen 171 und 172 einen vertikalen Abstand voneinander auf. Somit ist die Zugspindel 159 durch entsprechendes Verschwenken mit ihrer Zughülse 160 zwischen diese beiden Stützlaschen 171 und 172 einschwenkbar. Die Abmessungen des Bundsteges 162 sind dabei so gewählt, dass dieser Bundsteg 162 die beiden Stützlaschen 171 und 172 für eine klemmende Halterung eines Dämpferrohres zwischen den V-förmigen Ausnehmungen 141 und 166 und dem Presshebel 153 hintergreift. Somit ist der Presshebel 153 in einfacher Weise durch Anziehen der Zugspindel 159 über deren Betätigungshebel 163 in Richtung des Pfeiles 173 gegen die beiden Stützlaschen 171 und 172 pressbar. Dabei weist jede der Stützlaschen 171, 172 rückseitig im Bereich ihrer Außenkante noch einen Sicherheitsvorsprung 174 bzw. 175 auf, durch welchen sicher ein unbeabsichtigtes Herausrutschen der Zughülse 160 aus den beiden Stützlaschen 171 und 172 verhindert wird.

Um eine Beschädigung eines aufzunehmenden Rohres, wie beispielsweise eines Dämpferrohres eines Federdämpferbeines zu vermeiden, können die V-förmigen Ausnehmungen 141 und 166 des Plattenabschnittes 137 und der Stützplatte 164 einerseits und der Presshebel 153 andererseits mit Kunststoffabdeckungen (in der Zeichnung nicht dargestellt) versehen sein, welche jeweils ein Montageelement aufweisen, mit welchem diese Kunststoffabdeckungen zwischen den Plattenabschnitt 137 und die Stützplatte 164 einerseits und zwischen die beiden Klemmplatten 154 und 155 andererseits auswechselbar einsetzbar sind.

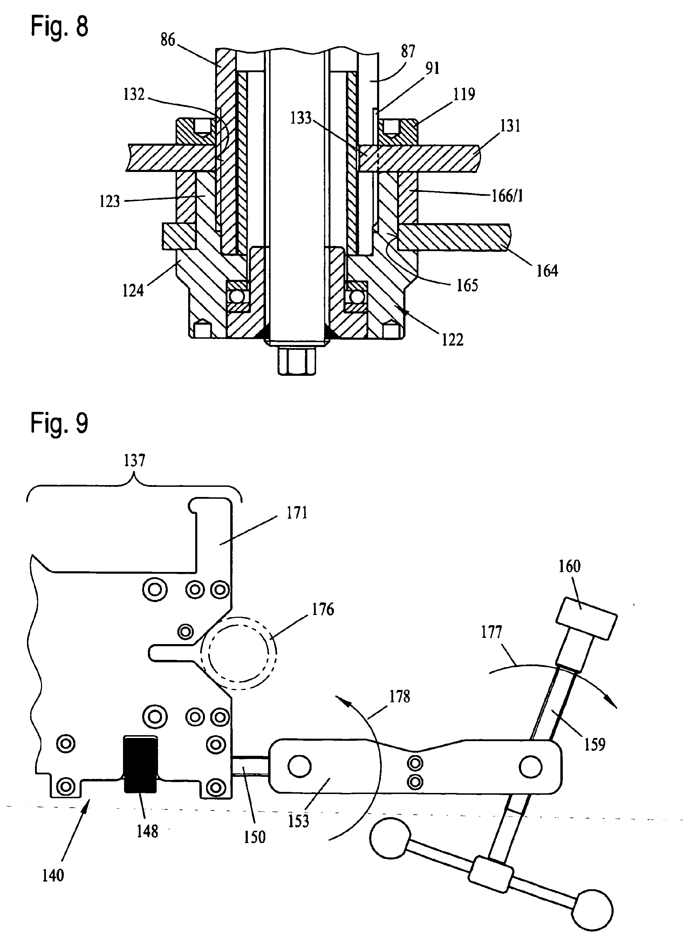

Fig. 8 zeigt einen Vertikalschnitt durch den unteren Endbereich des Führungsrohres 86 im Bereich seines Außengewindes 91. Es ist erkennbar, dass die Stützplatte 164 mit ihrer Durchgangsbohrung 165 auf den oberen Lagerabschnitt 123 der Lagerhülse 122 aufgesetzt ist und flächig am Stützbund 124 der Lagerhülse 122 aufliegt. Oberhalb der Stützplatte 164 ist der Distanzring 166/1 auf den Lagerabschnitt 123 aufgesetzt. Dabei entspricht die Summe der Dicke der Stützplatte 164 und der Höhe des Distanzringes 166/1 der axialen Höhe des Lagerabschnittes 123. Oberhalb des Lagerabschnittes 123 ist die Halteplatte 131 mit ihrer Aufnahmebohrung 132 aufgesetzt und über den Schraubring 119 feststehend gesichert. Dabei ist erkennbar, dass die Führungszunge 133 der Aufnahmebohrung 132 passend in den Stellschlitz 87 des Führungsrohres 86 hineinragt. In diesem montierten Zustand ist somit die gesamte in Fig. 7 dargestellte Einspannvorrichtung 140 feststehend am unteren Ende des Führungsrohres 86 befestigt. Damit ist auch eine Kraftaufnahme bzw. Krafteinleitung über das Führungsrohr 86 in die Einspannvorrichtung 140 sicher gewährleistet, so dass auch große Spannkräfte zum Spannen einer in einem Federdämpferbein eingesetzten Schraubenfeder aufnehmbar sind.

Fig. 9 zeigt eine Draufsicht des Plattenabschnittes 137 der Einspannvorrichtung 140. Dabei ist in Fig. 9 in Phantomlinien schematisch ein Dämpferrohr 176 dargestellt, welches durch die Einspannvorrichtung 140 klemmend zu halten ist.

In der in Fig. 9 dargestellten Ausgangslage befindet sich der Presshebel 153 etwa in axialer Verlängerung zur Einstellspindel 150 der Einstellmutter 148. Die Zugspindel 159 ist in Richtung des Pfeiles 177 mit ihrer Zughülse 160 nach außen geschwenkt.

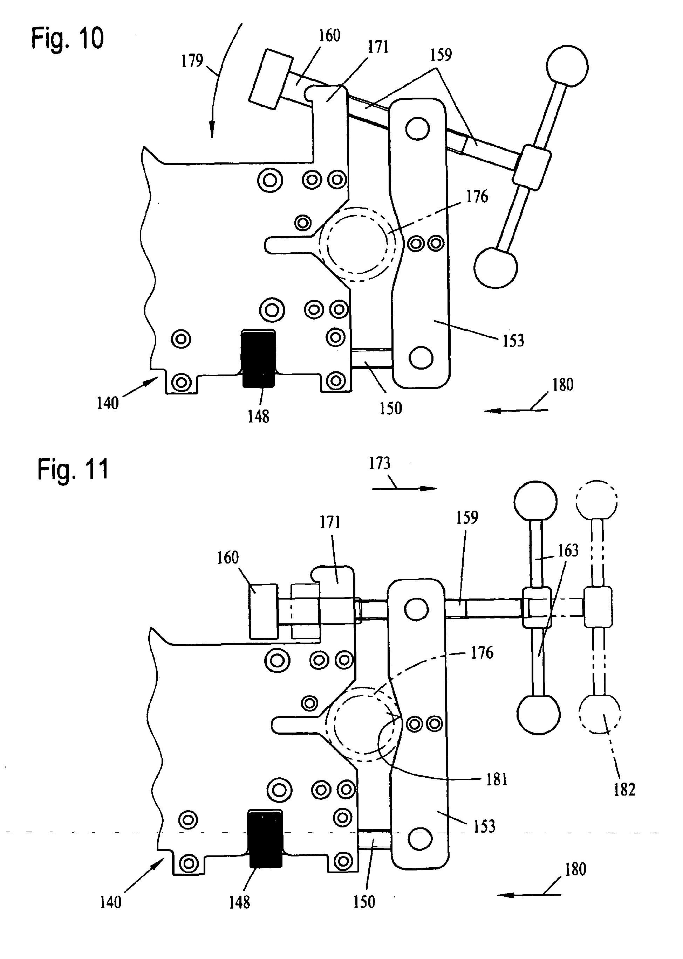

Nachdem das Dämpferrohr 176 in die in Fig. 9 dargestellte Position gebracht wurde, wird nun der Presshebel 153 in Richtung des Pfeiles 178 in eine etwa parallel zur Stützlasche 171 verlaufende Position gebracht, wie dies aus Fig. 10 ersichtlich ist. Durch Verschwenken der Zugspindel 159 mit ihrer Zughülse 160 in Richtung des Pfeiles 179 gelangt die Zugspindel 159 zwischen die beiden Stützlaschen 171 und 172, von welchen in Fig. 10 lediglich die Stützlasche 171 des Plattenabschnittes 137 erkennbar ist.

Sobald die Zugspindel 159 etwa parallel zur Einstellspindel 150 ausgerichtet ist, wie dies aus Fig. 11 erkennbar ist, ist nun die Einstellmutter 148 betätigbar, so dass sich anschließend die Einstellspindel 150 zusammen mit dem Presshebel 153 in Richtung des Pfeiles 180 bewegt, bis der Presshebel 153 etwa parallel zur Stützlasche 171 verlaufend am Dämpferrohr 176 anliegt. Dabei kann der Presshebel 153 zur Verbesserung der Klemmwirkung zum Dämpferrohr 176 hin mit einer gekrümmten bzw. bogenförmig verlaufenden Klemmfläche 181 versehen sein. Außerdem wird durch diesen bogenförmigen Verlauf der Klemmfläche 181 eine zusätzliche vertikale Ausrichtung des Dämpferrohres 176 zur Halteplatte 131 erreicht. Durch anschließendes Anziehen der Zugspindel 159 über deren Betätigungshebel 163 gelangt die Zugspindel zusammen mit der Zughülse 160 in die in Fig. 11 in Phantomlinien dargestellte Endposition 182.

Somit ist erkennbar, dass diese als Stützelement wirkende Einspannvorrichtung 140 in äußerst einfacher Weise mit einer Hand zum Einspannen eines Dämpferrohres 176 bedienbar ist. Der Mechaniker kann während des Schließens des Presshebels 153 stets das Dämpferrohr 176 in der gewünschten Position mit einer Hand festhalten. Die Schließbewegung sowie die anschließenden Stellbewegung einerseits der Einstellmutter 148 und andererseits der Zugspindel 159 kann unabhängig vom Festhalten des Dämpferrohres 176 mit einer Hand erfolgen. Somit kann diese, als Stützelement für das Dämpferrohr bzw. den unteren Federteller dienende Einspannvorrichtung 140 in einfachster Weise von einer Person bedient werden.

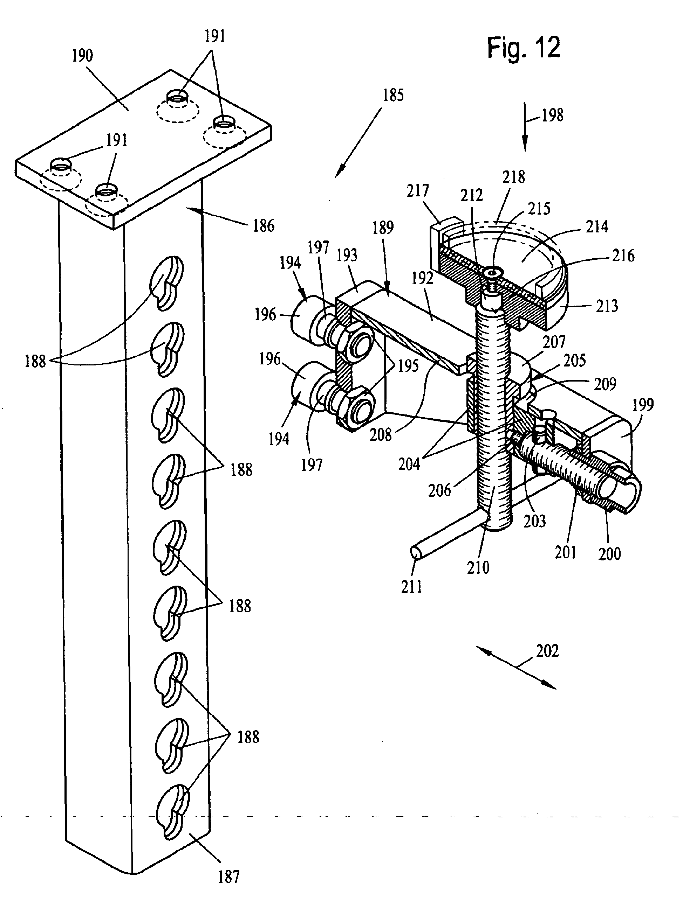

Zur weiteren Verbesserung der Handhabung kann zusätzlich "unterhalb" der Halteplatte 131 und der Stützplatte 164 aus Fig. 7 noch eine separate Stützvorrichtung 185 vorgesehen sein, wie diese nachfolgend zu Fig. 12 beispielhaft näher erläutert wird.

Fig. 12 zeigt eine perspektivische Darstellung der Stützvorrichtung 185, welche als einen Hauptbestandteil ein vertikal ausgerichtetes Tragprofil 186 aufweist. Dieses Tragprofil 186 kann eine U-förmige oder auch anderweitig geeignete Profilform aufweisen, welche eine hohe Biegesteifigkeit aufweist. Wie aus Fig. 12 ersichtlich ist, weist das Tragprofil 186 in seiner vorderen Stirnwand 187 mehrere, in gleichmäßigen Abständen übereinander angeordnete, schlüssellochartig ausgebildete Durchbrüche 188 auf. Diese Durchbrüche 188 dienen zur wahlweisen Kopplung des Tragprofils 186 mit einem aus einem Stützprofil 192 bestehenden Tragarm 189. Dieses Stützprofil 192 verläuft beim vorliegenden Ausführungsbeispiel etwa horizontal und weist einen U-förmigen Querschnitt auf. Zum Tragprofil 186 hin ist dieses Stützprofil 192 mit einer Stützwand 193 versehen, welche ihrerseits wiederum zwei übereinander angeordnete Halteschrauben 194 aufnimmt. Diese Halteschrauben 194 sind jeweils mittels einer Haltemutter 195 feststehend mit der Stützwand 193 verbunden, wie dies aus Fig. 12 ersichtlich ist.

Jede der Halteschrauben 194 weist einen Schraubenkopf 196 auf, welcher im montierten Zustand in horizontalem Abstand zur Stützwand 193 angeordnet ist. Dadurch ergibt sich zwischen den Schraubenköpfen 196 und der Stützwand 193 jeweils ein Montageschaft 197 jeder Halteschraube 194.

Der Durchmesser der Schraubenköpfe 196 ist dabei derart gewählt, dass die beiden Schraubenköpfe 196 durch den jeweils erweiterten oberen Bereich der schlüssellochartigen Durchbrüche 188 hindurch steckbar sind. Durch anschließendes vertikales Verschieben in Richtung des Pfeiles 198 gelangen die Montageschäfte 197 jeweils mit dem unteren, kleiner dimensionierten Bereich der Durchbrüche 188 in Eingriff, so dass die Schraubenköpfe 196 die vordere Stirnwand 187 im Bereich dieser kleiner ausgebildeten Durchbruchsbereiche der Durchbrüche 188 hintergreift. Damit ist das Stützprofil 192 variabel, stufenweise in seiner Höhe in unterschiedlichen Positionen am Tragprofil 186 "einhängbar". Durch diese Ausgestaltung der schlüssellochartigen Durchbrüche 188 im Zusammenwirken mit der speziellen Ausgestaltung der Halteschrauben 194 ist somit eine Verstellung des Stützprofils 192 am Tragprofil 186 in äußerst einfacher Weise und in äußerst kurzer Zeit durchführbar.

Beim vorliegenden Ausführungsbeispiel weist das Stützprofil 192 in seinem der Stützwand 193 gegenüberliegenden Endbereich eine Stellwand 199 auf, in welche eine Stellmutter 200 drehbar und axial unverschiebbar eingesetzt ist. Diese Stellmutter 200 steht mit einem Gewindezapfen 201 in Wirkverbindung, welcher bei Drehung der Stellmutter 200 in Richtung des Pfeiles 202 rechtwinklig zum vertikal verlaufenden Tragprofil 186 bewegt wird. Dieser Gewindezapfen 201 ist über einen Kerbstift 203 mit einem Stellkörper 204 verbunden, welcher sich entsprechend der Stellbewegung des Gewindezapfens 201 mit diesem in Richtung des Doppelpfeiles 202 innerhalb des Stützprofils 192 mitbewegt. In diesen Stellkörper 204 ist eine Gewindebuchse 205 eingesetzt, welche im Stellkörper 204 mittels einer Madenschraube 206 in ihrer Position verdrehsicher gesichert ist. Diese Gewindebuchse 205 weist einen radial erweiterten Lagerbund 207 auf, mittels welchem sich die Gewindebuchse 205 oberseitig auf der quer verlaufenden Querwand 208 des Stützprofils 192 abstützt. Um die Gewindebuchse 205 in Richtung des Doppelpfeiles 202 entlang der Querwand 208 verstellen zu können, weist diese ein entsprechendes Langloch 209 auf.

Durch diese vertikal ausgerichtete Gewindebuchse 205 ist eine Stellschraube 210 hindurch geschraubt. Diese Stellschraube 210 ist in ihrem unteren Endbereich mit einem quer verlaufenden und die Stellschraube 210 durchragenden Handhebel 211 versehen, über welchen die Stellschraube 210 in einfacher Weise manuell drehbar ist.

In ihrem nach oben aus der Gewindebuchse 205 herausragenden Endbereich, bildet die Stellschraube 210 einen Lagerkopf 212, auf welchen ein Stützteller 213 drehbar aufgesetzt ist. Auf diesem Stützteller 213 wiederum ist eine Stützplatte 214 aufgesetzt. Die Stützplatte 214 und der Stützteller 213 sind über eine entsprechende Montageschraube 215 auf dem Lagerkopf 212 gesichert. Beim vorliegenden Ausführungsbeispiel ist der Stützteller 213 zusammen mit der Stützplatte 214 feststehend mit der Stellschraube 210 verbunden. Erfindungsgemäß ist auch vorgesehen, dass der Stützteller 213 zusammen mit der Stützplatte 214 drehbar an der Stellschraube 210 befestigt ist. Dazu kann zwischen dem umlaufenden, gegenüber dem Lagerkopf 212 radial erweiterten Absatz 216 und dem Stützteller 213 ein in der Zeichnung nicht näher dargestelltes Axialdrucklager vorgesehen sein.

Weiter kann die Stützplatte 214 aus einem Kunststoffmaterial bestehen, um eine Beschädigung, beispielsweise eines auf der Stützplatte 214 aufgesetzten Dämpferrohres, sicher zu verhindern. Weiter kann am Stützteller 213 außenseitig auch ein vertikal nach oben vorstehender Anschlag 217 vorgesehen sein, welcher in Fig. 12 in Phantomlinien dargestellt ist. Ein solcher Anschlag verhindert das Abrutschen eines aufgesetzten Dämpferrohres. Damit ist auch eine Ausrichtung eines Dämpferrohres durch eine entsprechende Verstellung des Stütztellers 213 zusammen mit der Stützplatte 214 sicher durchführbar, ohne dass das Dämpferrohr abrutschen kann. Anstatt eines solchen Anschlages 217 kann auch die Stützplatte 214 beispielsweise mit einer umlaufenden Ringwand 218 versehen sein, wie dies in Fig. 12 ebenfalls in Phantomlinien dargestellt ist.

Durch diese Ausgestaltung der Stützvorrichtung 185 mit ihrem sowohl in vertikaler als auch in horizontaler Richtung variabel positionierbaren Stützteller 213 mit dessen Stützplatte 214 wird die Handhabung, insbesondere zum Ansetzen eines Federdämpferbeines mit seinem Dämpferrohr 176, wie zu den Fig. 4 bis 6 beschrieben, erheblich erleichtert. Insbesondere bei Federdämpferbeinen mit hohem Gewicht wird durch diese unterseitig an der Stützplatte 164 feststehend montierte Stützvorrichtung 185 ein Aufsetzen eines solchen Federdämpferbeines ermöglicht, so dass ein Mechaniker bei Reparaturarbeiten erheblich entlastet wird.

Durch entsprechende Verstellung der Position des Stütztellers 213 mit seiner Stützplatte 214 sowohl in vertikaler Richtung als auch in horizontaler Richtung ist eine positionsgenaue Ausrichtung sowohl des Dämpferrohres eines Federdämpferbeines als auch des an diesem Dämpferrohr feststehend befestigten Federtellers durchführbar. Dabei kann insbesondere bei der Vertikalverstellung die Höhe des Federdämpferbeines derart eingerichtet werden, dass das Dämpferrohr mit seinem Federteller oberseitig auf der Halteplatte 131 bzw. dessen vorderen Plattenabschnitt 137 im Bereich der V-förmigen Ausnehmung 141 aufliegt. Anschließend kann das Dämpferrohr, wie zu den Fig. 9 bis 11 beschrieben, feststehend fixiert werden.

Somit ist die Stützvorrichtung 185 insbesondere auch aufgrund der variabel einstellbaren Position des Stützprofils 192 am Tragprofil 186 sowie der Feineinstellmöglichkeit durch die Stellschraube 210 variabel auf unterschiedlich dimensionierte Federdämpferbeine mit Dämpferrohren einerseits unterschiedlichen Durchmessers und andererseits unterschiedlicher Länge einstellbar.

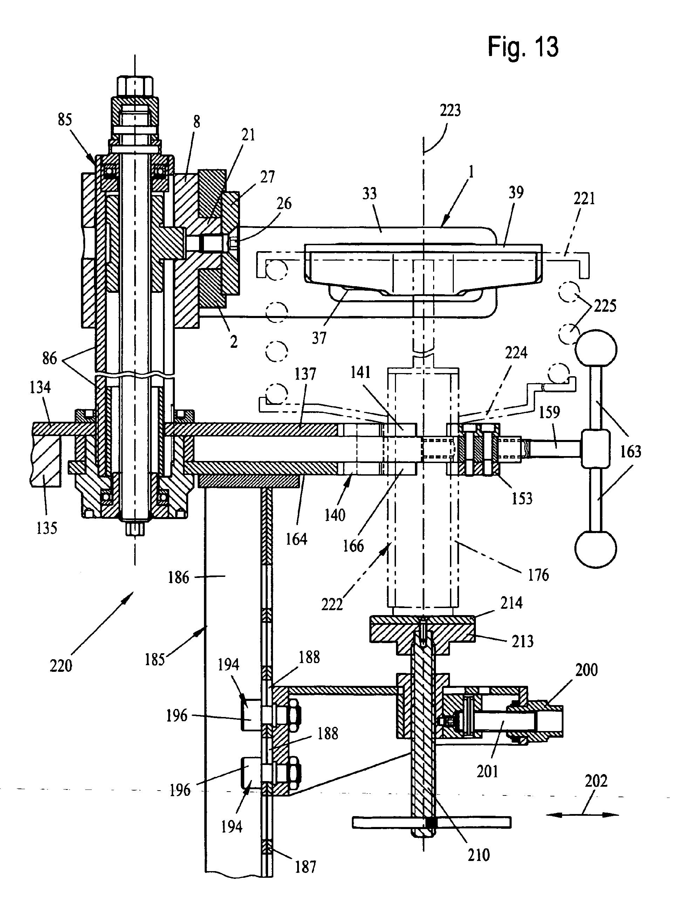

Fig. 13 zeigt hierzu einen teilweisen Vertikalschnitt durch eine vollständig montierte Vorrichtung 220. Zunächst zeigt Fig. 13 das Stellglied 85 mit dem in seiner obersten Vertikalposition am Führungsrohr 86 angeordneten Lagerelement 8. Auf dem Lagerzapfen 21 ist das Tragelement 2 drehbar gelagert angeordnet. Zur Fixierung dieses Lagerelementes 2 auf dem Lagerzapfen 21 ist die Lagerscheibe 27 stirnseitig aufgesetzt und mittels der Montageschraube 26 drehbar fixiert. In der Schnittdarstellung der Fig. 13 ist erkennbar, dass die Stellschiene 33 rechtwinklig zum Führungsrohr 86 verlaufend mit dem Tragelement 2 in Eingriff steht. Das Halteelement 39 steht mit dem Führungsschlitz 37 der Stellschiene 33 in Eingriff und ist beim vorliegenden Ausführungsbeispiel horizontal verlaufend ausgerichtet. Das Halteelement 39 nimmt einen oberen Federteller 221 eines Federdämpferbeines 222 auf, welche in Fig. 13 lediglich stilisiert in Phantomlinien dargestellt sind.

Aufgrund der Verstellbarkeit des Halteelementes 39 einerseits an der Stellschiene 33 und andererseits der Verstellbarkeit der Stellschiene 33 am Tragelement 2 ist das Halteelement 39 präzise auf die jeweilige Position und Größe des oberen Federtellers 221 des Federdämpferbeines 222 einstellbar. Insbesondere, wie dies aus Fig. 13 ersichtlich ist, ist das Halteelemente 39 symmetrisch zur vertikalen Längsmittelachse 223 des Federdämpferbeines 222 anordenbar, so dass eine optimale Krafteinleitung zu einer Schraubenfeder 225 des Federdämpferbeines 222 sichergestellt ist.

Weiter ist aus Fig. 13 erkennbar, dass das Dämpferrohr 176 des Federdämpferbeines 222 zwischen den V-förmigen Ausnehmungen 141 und 166 und dem Presshebel 153 passend aufgenommen ist. Die Zugspindel 159 wurde über deren Betätigungshebel 163 angezogen, so dass ein festsitzender Halt des Dämpferrohres 176 in der Einspannvorrichtung 140 bewirkt wird.

Das Federdämpferbein 222 steht dabei mit seinem Dämpferrohr 176 auf der Stützplatte 214 des Stütztellers 213 auf. Es ist auch hier erkennbar, dass aufgrund der Verstellmöglichkeit dieses Stütztellers 213 in Richtung des Pfeiles 202 über die Stellmutter 200 und den Gewindezapfen 201 die Stellschraube 210 und somit auch der Stützteller 213 mit seiner Stützplatte 214 konzentrisch zum Dämpferrohr 176 des Federdämpferbeines 222 ausrichtbar ist, wie dies deutlich aus Fig. 13 erkennbar ist.

Durch die Möglichkeit der Vertikalverstellung des Stütztellers 213 mit seiner Stützplatte 214 ist das Dämpferrohr 176 mit einem, im oberen Endbereich des Dämpferrohres 176 feststehend angeordneten, unteren Federteller 224 derart einstellbar, dass sich der Federteller 224 oberseitig am vorderen Plattenabschnitt 137 mit seiner V-förmigen Ausnehmung 141 sowie oberseitig am Presshebel 153 der Einspannvorrichtung 140 vertikal nach unten abstützt. Somit bildet diese Einspannvorrichtung 140 einerseits eine Haltevorrichtung für das Dämpferrohr 176 des Federdämpferbeines und andererseits ein Stützelement für den unteren Federteller 224. Damit ersetzt diese Einspannvorrichtung 140 ein sonst nach dem Stand der Technik übliches unteres Greiferelement, welches entweder mit dem Federteller 224 oder mit einer unteren Federwindung einer zwischen den beiden Federtellern 221 und 224 unter Vorspannung aufgenommenen Schraubenfeder 225 eingesetzt ist.

Des Weiteren ist aus Fig. 13 auch ersichtlich, dass die beiden Schraubenköpfe 196 der Halteschrauben 194 in diesem montierten Zustand zwei vertikal benachbarte Durchbrüche 188 durchragen und die vordere Stirnwand 187 des Tragprofils 186 hintergreifen.

Die Einspannvorrichtung 140 ist dabei mit ihrer Halteplatte 131 ortsfest auf der Arbeitsplatte 135, beispielsweise einer Werkbank, angeordnet. Durch diese ortsfeste Anordnung der Vorrichtung 220 wird eine äußerst einfache Handhabung sichergestellt.

Somit ist zusammenfassend erkennbar, dass die erfindungsgemäße Vorrichtung äußerst variabel zum Spannen einer Schraubenfeder 225 eines Federdämpferbeines 222 einsetzbar ist. Insbesondere sind die beiden separaten Halteelemente 39 und 40 äußerst variabel sowohl auf die Abmessungen als auch auf unterschiedliche Steigungen einerseits von Federwindungen und andererseits von aufzunehmenden Federtellern einstellbar, so dass mit der erfindungsgemäßen Vorrichtung die unterschiedlichsten Schraubenfedern 225 von unterschiedlichen Federdämpferbeinen 222 zu Reparaturzwecken gespannt werden können. Insbesondere können variabel Konstruktionen mit rechtssteigenden und auch mit linkssteigenden Schraubenfedern 225 gespannt werden, da die erfindungsgemäße Vorrichtung an solche unterschiedlichen Steigungen aufgrund der schwenkbaren Lagerung der Halteelemente an der jeweils zugehörigen Stellschiene 33 und 34 an solche Bedingungen anpassbar ist.

Es sind folglich aufgrund der erfindungsgemäßen Ausgestaltung der Vorrichtung zum Spannen von unterschiedlichen Federdämpferbeinen 222 bzw. deren Schraubenfedern 225 nicht, wie beim Stand der Technik, teilweise bis zu zwanzig verschiedene Greiferelemente oder Stützelemente notwendig, um alle unterschiedlichen Federdämpferbeine 222 spannen zu können. Dabei können hier auch solche Konstruktionen sicher gespannt werden, bei welchen die Federsteigung entweder im unteren oder im oberen Bereich der zu spannenden Schraubenfeder stark ansteigt. Bei solchen Konstruktionen gab es bisher bei den Federspannern mit starren und einstückig ausgebildeten Greiferelementen stets das Problem, dass die Greiferelemente während des Spannvorganges aus der Schraubenfeder herausspringen können. Dies ist aufgrund der Steigungsanpassung, auch während des Spannvorganges der Halteelemente 39 und 40, sicher ausgeschlossen. Außerdem können diese Halteelemente 39, 40 aufgrund der Klemmwirkung (Selbsthemmung), wie beispielsweise zu den Fig. 1 und 2 ausgeführt, zwischen den Tragschienen 33 und 34 und dem Tragelement 2 nicht aus der Schraubenfeder herausspringen oder eventuell von einem aufgenommen Federteller 221 abrutschen.

Des Weiteren ist die spezielle Ausgestaltung der Einspannvorrichtung 140 für eine "Einhandbedienung" ausgelegt, so dass der Mechaniker ein Federdämpferbein - auch in Verbindung mit der Stützvorrichtung 185 - in äußerst einfacher Weise in die Einspannvorrichtung 140 einbringen und dort fixieren kann.

Erfindungsgemäß ist die im Ausführungsbeispiel dargestellte Vorrichtung 220 nicht auf die konkrete Ausgestaltung beschränkt. Insbesondere kann das Stellglied 85 auch als Teleskopzylinder ausgebildet sein, wie dies bei anderen Federspannern aus dem Stand der Technik bereits bekannt ist. Auch kann hier ein Hydraulikzylinder oder ein Pneumatikzylinder vorgesehen sein, durch welchen die Stellbewegung des gesamten Stützelementes 1 bewirkbar ist.

Weiter ist aus Fig. 13 ersichtlich, dass aufgrund des Zusammenwirkens der Einspannvorrichtung 140 und des Stellgliedes 85 eine absolut parallele Ausrichtung des Federdämpferbeines 222 mit seiner Längsmittelachse 223 zum Stellglied 85 erfolgt, so dass beim späteren Spannvorgang ein Abrutschen, insbesondere der beiden Halteelemente 39 und 40 von einer aufgenommenen Federwindung oder von einem aufgenommenen Federteller 221, sicher ausgeschlossen ist.

Wird bei der in Fig. 13 dargestellten Ausführungsform der Vorrichtung 220 die Stützvorrichtung 185 eingesetzt, so kann die Einspannvorrichtung 140 auch ohne die Stützplatte 164 ausgeführt sein, da eine vertikale Ausrichtung des Dämpferrohres 176 durch zusammenwirken der Ausnehmung 141 und des Presshebels 153 einerseits und des verstellbaren Stütztellers 213 andererseits in sicherer Weise gewährleistet ist.

## Patentansprüche

1. Vorrichtung (220) zum Spannen einer Schraubenfeder (225) eines Federdämpferbeines (222) bestehend aus einem Stellglied (85) sowie zwei Stützelementen (1, 140), deren Abstand durch eine Betätigung des Stellgliedes (85) veränderbar ist und welche mit einem Teil (221) des Federdämpferbeines (222) oder der im Federdämpferbein (222) zwischen einem unteren und einem oberen Federteller (221 und 224) unter Vorspannung aufgenommenen Schraubenfeder (225) in Eingriff bringbar sind, wobei eines der Stützelemente (1) zwei Halteelemente (39, 40) aufweist, welche relativ zueinander verstellbar mit dem Stellglied (85) in Verbindung stehen,
**dadurch gekennzeichnet,**
**dass** die Halteelemente (39, 40) zur Anpassung ihrer Position und Ausrichtung an die Geometrie einer aufzunehmenden Federwindung oder eines aufzunehmenden Teils (221) des Federdämpferbeines (222) jeweils an einer Stellschiene (33, 34) drehbar und längs der jeweiligen Stellschiene (33, 34) verschiebbar gelagert sind,
**dass** die Stellschienen (39, 40) an einem gemeinsamen Tragelement (2) verstellbar gelagert sind,
und **dass** das Tragelement (2) an einem mit dem Stellglied (85) verbundenen Lagerelement (8) drehbar gelagert ist.

2. Vorrichtung nach Anspruch 1, **dadurch gekennzeichnet, dass** die Stellschienen (33, 34) im Wesentlichen parallel zueinander verlaufen und deren Abstand voneinander einstellbar ist und, dass das Tragelement (2) zwei in einer gemeinsamen Ebene (5) liegende Tragschienen (3, 4) zur verstellbaren Aufnahme der Stellschienen (39, 40) bildet.

3. Vorrichtung nach Anspruch 2, **dadurch gekennzeichnet, dass** die Tragschienen (3, 4) über einen Zylinderabschnitt (6) miteinander verbunden sind und, dass der Zylinderabschnitt (6) am Lagerelement (8) befestigt ist und, dass der Zylinderabschnitt (6) des Tragelementes (2) eine Lagerbohrung (7) aufweist, über welche das Tragelement (2) an einem Lagerzapfen (21) des Lagerelementes (8) drehbar gelagert ist.

4. Vorrichtung nach Anspruch 3, **dadurch gekennzeichnet, dass** das Tragelement (2) im Umgebungsbereich der Lagerbohrung (7) zum Lagerelement (8) hin vorstehende Anschlagstifte (11, 12) aufweist, welche jeweils in einen bogenförmigen Stellschlitz (22, 23) des Lagerelementes (8) zur Begrenzung des maximal möglichen Drehwinkels des Tragelements (2) relativ zum Lagerelement (8) eingreifen.

5. Vorrichtung nach Anspruch 3 oder 4, **dadurch gekennzeichnet, dass** das Lagerelement (8) eine Durchgangsbohrung (31) aufweist, über welche das Lagerelement (8) mit dem Stellglied (85) koppelbar ist und, dass das Stellglied (85) ein Führungsrohr (86) aufweist, entlang welchem das Lagerelement (8) unverdrehbar und axial verstellbar geführt ist.

6. Vorrichtung nach Anspruch 5, **dadurch gekennzeichnet, dass** das Führungsrohr (86) eine Stellspindel (93) aufweist, welche wenigstens in einem Endbereich des Führungsrohres (86) drehbar
- gelagert ist, und dass die Stellspindel (93) mit einer im Führungsrohr (86) verstellbar gleitend aufgenommenen Stellmutter (115) in Eingriff steht, welche mit dem Lagerelement (8) mechanisch gekoppelt ist und bei Betätigung der Stellspindel (93) eine Stellbewegung (Pfeil 118) ausführt.

7. Vorrichtung nach Anspruch 6, **dadurch gekennzeichnet, dass** die Stellmutter (115) einen radial vorstehenden Kupplungsfinger (117) aufweist, welcher eine sich annähernd über die gesamte Länge des Führungsrohres (86) erstreckenden Stellschlitz (87) des Führungsrohres (86) nach außen durchragt und, dass im Bereich der Durchgangsbohrung (31) des Lagerelementes (8) eine radiale Senkbohrung (32) vorgesehen ist, mit welcher der Kupplungsfinger (117) formschlüssig in Eingriff steht.

8. Vorrichtung nach einem der Ansprüche 1 bis 7, **dadurch gekennzeichnet, dass** die Halteelemente (39, 40) in einem sich etwa über die halbe Länge der jeweils zugeordneten Stellschiene (33, 34) erstreckenden Stellschlitz (37, 38) über einen Gleitstein (49, 50) verstellbar aufgenommen sind und, dass die Halteelemente (39, 40) jeweils einen Kupplungsblock (41, 42) aufweisen, mit welchem das jeweiligen Halteelement (39, 40) in eine erweiterte Einsenkung (47, 48) des jeweiligen Stellschlitzes (37, 38) eingreift.

9. Vorrichtung nach Anspruch 8, **dadurch kennzeichnet, dass** die Kupplungsblöcke (41, 42) mit V-förmig schräg zueinander verlaufenden Anschlagflächen (43, 44 bzw. 45, 46) versehen sind, mit welchen der Kupplungsblock (41, 42) mit der zugehörigen Einsenkung (47, 48) derart in Wirkverbindung steht, dass der Drehwinkel des jeweiligen Halteelementes (39, 40) in der zugehörigen Führungsnut (37, 38) begrenzt ist.

10. Vorrichtung nach Anspruch 8 oder 9, **dadurch gekennzeichnet, dass** die Formgebung und Ausgestaltung des Kupplungsblockes (41, 42), des Gleitsteines (49, 50) und des Führungsschlitzes (37, 38) derart gewählt ist, dass bei Belastung des Halteelementes (39, 40) parallel zur Stellschiene (Pfeil 77) eine Klemmwirkung erzielt wird, durch welche das Halteelement (39, 40) selbsthemmend, unverrückbar an der Stellschiene (33, 34) gehalten ist.

11. Vorrichtung nach Anspruch 2, **dadurch gekennzeichnet, dass** Tragschiene (3, 4) eine etwa rechteckige Querschnittsform aufweist und, dass die Stellschiene (33, 34) über eine Stellnut oder einen Stelldurchbruch (35, 36) an der Tragschiene (3, 4) verstellbar gelagert ist und, dass die Stellnut oder der Stelldurchbruch (35, 36) an die Querschnittsform der Tragschiene (3, 4) derart angepasst ist, dass bei einer Belastung der Stellschiene (33, 34) im Bereich ihres freien Endes parallel (Pfeil 75 bzw. 76) zur Tragschiene (3, 4) eine Klemmwirkung erzielt wird, durch welche die jeweilige Stellschiene (33, 34) selbsthemmend, unverrückbar an der Tragschiene (3, 4) gehalten ist.

12. Vorrichtung nach einem der Ansprüche 1 bis 11, **dadurch gekennzeichnet, dass** das Stellglied (85) in seinem einen Endbereich eine feststehende Lagerhülse (122) aufweist, welche zur feststehenden Aufnahme des zweiten Stützelementes (140) am Stellglied (85) vorgesehen ist.

13. Vorrichtung nach Anspruch 12, **dadurch gekennzeichnet, dass** das zweite Stützelement zur Aufnahme eines Dämpferrohres (176) als Einspannvorrichtung (140) ausgebildet ist.

14. Vorrichtung nach Anspruch 13, **dadurch gekennzeichnet, dass** die Einspannvorrichtung (140) eine Halteplatte (131) aufweist, die mit einem Montageabschnitt (134) versehen ist, über welchen die Einspannvorrichtung (140) zusammen mit dem Stellglied (85) ortsfest auf einer Arbeitsplatte (135) einer Werkbank oder dgl. montierbar ist und, dass die Halteplatte (131) in ihrem dem Montageabschnitt (134) gegenüberliegenden Endbereich eine über die Arbeitsplatte (135) hinaus stehenden Plattenabschnitt (137) bildet, welcher zur Aufnahme des Dämpferrohres (176) eine V-fömige Ausnehmung (141) aufweist.

15. Vorrichtung nach Anspruch 14, **dadurch gekennzeichnet, dass** die V-förmige Ausnehmung (141) zwei V-Schenkel (142, 143) bildet, welche unter einem Winkel von 60 bis 120°, vorzugsweise unter 90° zueinander verlaufen und, dass zwischen den V-Schenkeln (142, 143) ein Aufnahmeschlitz (169) vorgesehen ist, welcher im Einsatz zur Aufnahme eines radial vom Dämpferrohr vorstehenden Blechbauteils dient.

16. Vorrichtung nach Anspruch 14 oder 15, **dadurch gekennzeichnet, dass** die Einspannvorrichtung (140) einen Presshebel (153) aufweist, mittels welchem das einzuspannende Dämpferrohr (176) gegen die V-förmige Ausnehmung des Plattenabschnittes (137) pressbar ist und, dass der Presshebel (153) mit seinem einen Endbereich über einen Lagerkopf (152) schwenkbar mit dem Plattenabschnitt (137) verbunden ist.

17. Vorrichtung nach Anspruch 16, **dadurch gekennzeichnet, dass** der Lagerkopf (152) eine Einstellspindel (150) aufweist, mit welcher der Lagerkopf (152) mit einer Einstellmutter (148) in Wirkverbindung steht und, dass die Einstellmutter (148) am Plattenabschnitt (137) der Einspannvorrichtung (140) drehbar und axial unverschiebbar gelagert ist.

18. Vorrichtung nach Anspruch 17, **dadurch gekennzeichnet, dass** zur Lagerung der Einstellmutter (148) in einem Bereich seitlich neben der Ausnehmung (141) des Plattenabschnittes (137) zwei unterhalb des Plattenabschnittes (137) angeordnete Lagerelemente (146, 147) vorgesehen sind.

19. Vorrichtung nach einem der Ansprüche 16 bis 18, **dadurch gekennzeichnet, dass** der Presshebel (153) in seinem dem Lagerkopf (152) gegenüberliegenden Endbereich eine Stellmutter (158) aufweist, welche schwenkbar am Presshebel (153) gelagert ist und, dass die Stellmutter (158) mit einer Zugspindel (159) in Eingriff steht, mittels welcher die zum Einspannen des Dämpferrohres (176) erforderlichen Presskräfte aufbringbar sind.

20. Vorrichtung nach Anspruch 19, **dadurch gekennzeichnet, dass** der Plattenabschnitt (137) in seinem den Lagerelementen (146, 147) gegenüberliegenden seitlichen Bereich eine seitlich nach außen vorstehende Stützlasche (171) aufweist und, dass die Zugspindel (159) an ihrem dem Plattenabschnitt (137) zugewandten Ende mit einer Zughülse (160) versehen ist, welche einen radial erweiterten Bundsteg (162) aufweist und, dass der Presshebel (153) und die Zugspindel (159) derart gegenüber dem Plattenabschnitt schwenkbar sind, dass die Zughülse (160) mit ihrem Bundsteg (162) die Stützlasche (171) entgegen der Zugrichtung (Pfeil 173) hintergreift.

21. Vorrichtung nach einem der Anspruch 14 bis 20, **dadurch gekennzeichnet, dass** seitlich neben der V-förmigen Ausnehmung (141) zwei etwa symmetrisch zur Ausnehmung (141) unterhalb des Plattenabschnittes (137) angeordnete und zum Presshebel (153) hin vorstehende Führungsschenkel (144, 145) zur Vereinfachung des Ansetzens des Dämpferrohres (176) an der Ausnehmung (141) vorgesehen sind.

22. Vorrichtung nach einem der Ansprüche 14 bis 21, **dadurch gekennzeichnet, dass** dem Plattenabschnitt (137) eine zusätzliche Stützplatte (164) zugeordnet ist, welche unterhalb des Plattenabschnittes (137) angeordnet ist und, dass die Stützplatte (164) mit einer V-förmigen Ausnehmung (166) versehen ist, deren Form und Anordnung der V-förmigen Ausnehmung des Plattenabschnittes (137) entspricht und, dass die Stützplatte (164) unterseitig an den Lagerelementen (146, 147) und den Führungsschenkeln (144, 145) positioniert ist und, dass die Stützplatte (164) konzentrisch zur Aufnahmebohrung (132) der Halteplatte (131) eine Durchgangsbohrung (165) aufweist, mit welcher die Stützplatte (164) auf den Lagerabschnitt (123) der Lagerhülse (122) des Stellgliedes (85) aufsetzbar ist.

23. Vorrichtung nach Anspruch 22, **dadurch gekennzeichnet, dass** zwischen der Halteplatte (131) und der Stützplatte (164) im Bereich der Aufnahmebohrung (132) bzw. der Durchgangsbohrung (165) ein Distanzring (166/1) als Abstandshalter vorgesehen ist, welcher zusammen mit der Stützplatte (164) auf den Lagerabschnitt (123) der Lagerhülse (122) aufsetzbar ist und, die Stützplatte (164) mit einer seitlich vorstehenden Stützlasche (172) versehen ist, welche zur Stützlasche (171) des Plattenabschnittes (137) beabstandet und deckungsgleich zur Stützlasche (171) des Plattenabschnittes (137) angeordnet ist und, dass die Zughülse (160) mit ihrem Bundsteg (162) gleichzeitig mit der Stützlasche (171) des Plattenabschnittes (137) und der Stützlasche (172) der Stützplatte (164) in Eingriff bringbar ist.

24. Vorrichtung nach Anspruch 22 bis 23, **dadurch gekennzeichnet, dass** unterseitig an der Stützplatte (164) eine Stützvorrichtung (185) vorgesehen ist und, dass die Stützvorrichtung (185) einen unterhalb des in der Einspannvorrichtung (140) aufgenommen Dämpferrohres (176) positionierbaren Stützteller (213) aufweist und, dass die Stützvorrichtung (185) ein vertikal nach unten gerichtetes Tragprofil (186) aufweist, an welchem ein horizontal verlaufender Tragarm (189) vertikal verstellbar angeordnet ist und, dass der Tragarm (189) mit einer Verstellvorrichtung (200 bis 211) versehen ist, mittels welcher der Stützteller (213) horizontal und vertikal positionierbar ist.

## Claims

1. Device (220) for tensioning a helical spring (225) of a spring damping leg (222) consisting of an adjusting element (85) and two support elements (1, 140), the spacing between which can be changed by activating the adjusting element (85) and which can be moved into engagement with part (221) of the spring damping leg (222) or the helical spring (225) mounted under pretensioning in the spring damping leg (222) between a lower and an upper spring plate (221 and 224), wherein one of the support elements (1) comprises two holding elements (39, 40), which are connected relative to one another adjustably by the adjusting element (85),
**characterised in that**
the holding elements (39, 40) are mounted to be rotatable on an adjusting rail (33, 34) so as to adjust their position and alignment to the geometry of a spring winding to be mounted or a part (221) to be mounted of the spring damping leg (222) and are mounted displaceably along the respective adjusting rail (33, 34),
**in that** the adjusting rails (39, 40) are mounted adjustably on a common support element (2)
and **in that** the support element (2) is rotatably mounted on a bearing element (8) connected to the adjusting element (85).

2. Device according to claim 1, **characterised in that** the adjusting rails (33, 34) run essentially parallel to one another and their distance apart from one another can be adjusted, and **in that** the support element (2) forms two support rails (3, 4) lying in a common plane (5) for the adjustable mounting of the adjusting rails (39, 40).

3. Device according to claim 2, **characterised in that** the support rails (3, 4) are joined together by a cylinder section (6), and **in that** the cylinder section (6) is secured onto the bearing element (8), and **in that** the cylinder section (6) of the support element (2) comprises a bearing bore (7), by means of which the support element (2) is mounted rotatably on a bearing pin (21) of the bearing element (8).

4. Device according to claim 3, **characterised in that** the support element (2) in the surrounding area of the bearing bore (7) comprises stop pins (11, 12) projecting towards the bearing element (8), which engage respectively in a curved adjusting slot (22, 23) of the bearing element (8) for delimiting the maximum possible rotational angle of the support element (2) relative to the bearing element (8).

5. Device according to claim 3 or 4, **characterised in that** the bearing element (8) comprises a through bore (31), by means of which the bearing element (8) can be coupled with the adjusting element (85), and **in that** the adjusting element (85) comprises a guiding pipe (86) along which the bearing element (8) is guided non-rotatably and axially adjustably.

6. Device according to claim 5, **characterised in that** the guiding pipe (86) comprises an adjusting spindle (93), which is rotatably mounted at least in one end section of the guiding pipe (86), and **in that** the adjusting spindle (93) is in engagement with an adjusting nut (115) mounted adjustably to slide in the guiding pipe (86), which nut is coupled mechanically with the bearing element (8) and on activating the adjusting spindle (93) performs an adjustment movement (arrow 118).

7. Device according to claim 6, **characterised in that** the adjusting nut (115) comprises a radially projecting coupling finger (117), which penetrates outwards through an adjusting slot (87) of the guiding pipe (86) extending almost over the entire length of the guiding pipe (86), and **in that** in the region of the through bore (31) of the bearing element (8) a radial countersink (32) is provided with which the coupling finger (117) is in positive engagement.

8. Device according to one of claims 1 to 7, **characterised in that** the holding elements (39, 40) are mounted adjustably in an adjusting slot (37, 38) extending over half the length of the respectively assigned adjusting rail (33, 34) by a sliding member (49, 50), and **in that** the holding elements (39, 40) respectively comprise a coupling block (41, 42) with which the respective holding element (39, 40) engages in an extended sunk cavity (47, 48) of the respective adjusting slot (37, 38).

9. Device according to claim 8, **characterised in that** the coupling blocks (41, 42) are provided with V-shaped obliquely running stop faces (43, 44 or 45, 46), by means of which the coupling block (41, 42) is in active connection with the respective sunk cavity (47, 48), such that the rotational angle of the respective holding element (39, 40) is limited in the assigned guiding groove (37, 38).

10. Device according to claim 8 or 9, **characterised in that** the shaping and design of the coupling block (41, 42) of the sliding member (49, 50) and the guiding slot (37, 38) is selected such that on loading the holding element (39, 40) parallel to the adjusting rail (arrow 77) a clamping effect is achieved, by means of which the holding element (39, 40) is held in a self-locking, non-displaceable manner on the adjusting rail (33, 34).

11. Device according claim 2, **characterised in that** the support rail (3, 4) has a rectangular cross sectional shape, and **in that** the adjusting rail (33, 34) is mounted adjustably by an adjusting groove or an adjusting opening (35, 36) on the support rail (3, 4), and **in that** the adjusting groove or the adjusting opening (35, 36) is adjusted to the cross sectional shape of the support rail (3, 4) such that on loading of the adjusting rail (33, 34) in the region of its free end (arrow 75 or 76) parallel to the support rail (3, 4) a clamping effect is achieved, by means of which the respective adjusting rail (33, 34) is held is a self-locking, non-displaceable manner on the support rail (3, 4).

12. Device according to one of claims 1 to 11, **characterised in that** the adjusting element (85) at one end section comprises a fixed bearing sleeve (122), which is provided for securely mounting the second support element (140) on the adjusting element (85).

13. Device according to claim 12, **characterised in that** the second support element is designed for mounting a damping pipe (176) as a tensioning device (140).

14. Device according to claim 13, **characterised in that** the tensioning device (140) comprises a holding plate (131) which is provided with an assembly section (134), by means of which the tensioning device (140) together with the adjusting element (85) is fixed onto an operating plate (135) of a workbench or the like, and **in that** the holding plate (131) in its end section opposite the assembly section (134) forms a plate section (137) projecting over the operating plate (135), which plate section for mounting the damping pipe (176) has a V-shaped recess (141).

15. Device according to claim 14, **characterised in that** the V-shaped recess (141) forms two V-legs (142, 143), which run at an angle to one another of 60 to 120°, preferably below 90°, and **in that** between the V-legs (142, 143) a mounting slot (169) is provided, which is used for mounting a sheet metal component projecting radially from the damping pipe.

16. Device according to claim 14 or 15, **characterised in that** the tensioning device (140) comprises a pressing lever (153), by means of which the damping pipe (176) to be tensioned can be pressed against the V-shaped recess of the plate section (137), and **in that** the pressing lever (153) at one end section is connected pivotably via a bearing head (152) to the plate section (137).

17. Device according to claim 16, **characterised in that** the bearing head (152) comprises an adjusting spindle (150), by means of which the bearing head (152) is in active connection with an adjusting nut (148), and **in that** the adjusting nut (148) is mounted rotatably and axially non-displaceably on the plate section (137) of the tensioning device (140).

18. Device according to claim 17, **characterised in that** for bearing the adjusting nut (148) in a section laterally next to the recess (141) of the plate section (137) two bearing elements (146, 147) are provided underneath the plate section (137).

19. Device according to one of claims 16 to 18, **characterised in that** the pressing lever (153) in its end section opposite the bearing head (152) comprises an adjusting nut (158), which is mounted pivotably on the pressing lever (153), and **in that** the adjusting nut (158) is in engagement with a tensioning spindle (159), by means of which the pressing forces required for tensioning the damping pipe (176) can be obtained.

20. Device according to claim 19, **characterised in that** the plate section (137) in its lateral region opposite the bearing elements (146, 147) comprises a support tab (171) projecting laterally outwards and **in that** the tensioning spindle (159) is provided at its end facing the plate section (137) with a tensile sleeve (160) which has a radially extended flange web (162) and **in that** the pressing lever (153) and the tensioning spindle (159) are pivotable relative to the plate section such that the tensioning sleeve (160) with its flange web (162) grips under the support tab (171) opposite the tensioning direction (arrow 173).

21. Device according to one of claims 14 to 20, **characterised in that** laterally next to the V-shaped recess (141) two guiding legs (144, 145) arranged symmetrically to the recess (141) underneath the plate section (137) and projecting towards the pressing lever (153) are provided for simplifying the attachment of the damping pipe (176) onto the recess (141).

22. Device according to one of claims 14 to 21, **characterised in that** an additional support plate (164) is assigned to the plate section (137), which support plate is arranged underneath the plate section (137) and **in that** the support plate (164) is provided with a V-shaped recess (166), the shape and arrangement of which correspond to the V-shaped recess of the plate section (137), and **in that** the support plate (164) is positioned on the bottom side on the bearing elements (146, 147) and the guiding legs (144, 145), and **in that** the support plate (154) concentrically to the mounting bore (132) of the holding plate (131) comprises a through bore (165), by means of which the support plate (164) can be fitted onto the bearing section (123) of the bearing sleeve (122) of the adjusting element (85).

23. Device according to claim 22, **characterised in that** between the holding plate (131) and the support plate (164) in the region of the mounting bore (132) or the through bore (165) a spacing ring (166/1) is provided as a spacer, which together with the support plate (164) can be fitted onto the bearing section (123) of the bearing sleeve (122) and the support plate (164) is provided with a laterally projecting support tab (172), which is arranged spaced apart from the support tab (171) of the plate section (137) and congruent to the support tab (171) of the plate section (137), and **in that** the tensile sleeve (160) can be brought into engagement with its flange web (162) at the same time with the support tab (171) of the plate section (137) and the support tab (172) of the support plate (164).

24. Device according to claim 22 to 23, **characterised in that** on the bottom of the support plate (164) a support device (185) is provided and **in that** the support device (185) comprises a support plate (213) which can be positioned underneath the damping pipe (176) mounted in the tensioning device (140) and **in that** the support device (185) comprises a support profile (186) pointing vertically downwards, on which a horizontally running support arm (189) is arranged to be vertically adjustable, and **in that** the support arm (189) is provided with an adjusting device (200 to 211) by means of which the support plate (213) can be positioned horizontally and vertically.

## Revendications

1. Dispositif (220) pour serrer un ressort hélicoïdal (225) d'une jambe de ressort-amortisseur (222), constitué d'un organe d'actionnement (85) et de deux éléments d'appui (1, 140) dont l'espacement peut être modifié en manoeuvrant l'organe d'actionnement (85) et qui peuvent être amenés en prise avec un élément (221) de la jambe de ressort-amortisseur (222) ou avec le ressort hélicoïdal (225) reçu sous précontrainte dans la jambe de ressort-amortisseur (222) entre une coupelle de ressort inférieure (221) et une coupelle de ressort supérieure (224), sachant qu'un (1) des éléments d'appui présente deux éléments de maintien (39, 40) qui sont reliés à l'organe d'actionnement (85) en pouvant être déplacés l'un par rapport à l'autre,
**caractérisé en ce que** les éléments de maintien (39, 40) sont, afin d'adapter leur position et leur orientation à la géométrie d'une spire de ressort à recevoir ou d'un élément à recevoir (221) de la jambe de ressort-amortisseur (222), respectivement montés à rotation sur un profilé d'actionnement (33, 34) et à translation le long du profilé d'actionnement respectif (33, 34),
**en ce que** les profilés d'actionnement (33, 34) sont montés à déplacement sur un élément porteur commun (2),
et **en ce que** l'élément porteur (2) est monté à rotation sur un élément de palier (8) relié à l'organe d'actionnement (85).

2. Dispositif selon la revendication 1, **caractérisé en ce que** les profilés d'actionnement (33, 34) sont disposés essentiellement parallèlement entre eux et leur distance mutuelle est réglable, et **en ce que** l'élément porteur (2) présente deux profilés porteurs (3, 4) situés dans un plan commun (5) et destinés à recevoir à déplacement les profilés d'actionnement (33, 34).

3. Dispositif selon la revendication 2, **caractérisé en ce que** les profilés porteurs (3, 4) sont reliés entre eux par l'intermédiaire d'un tronçon cylindrique (6), **en ce que** le tronçon cylindrique (6) est fixé sur l'élément de palier (8), et **en ce que** le tronçon cylindrique (6) de l'élément porteur (2) présente un alésage de palier (7) au moyen duquel l'élément porteur (2) est monté à rotation sur un tourillon de palier (21) de l'élément de palier (8).

4. Dispositif selon la revendication 3, **caractérisé en ce que** l'élément porteur (2) présente dans la région environnante de l'alésage de palier (7) deux goupilles de butée (11, 12) qui dépassent en direction de l'élément de palier (8) et qui s'engagent respectivement dans une fente d'actionnement arquée (22, 23) de l'élément de palier (8) afin de limiter l'angle maximal possible de rotation de l'élément porteur (2) par rapport à l'élément de palier (8).

5. Dispositif selon la revendication 3 ou 4, **caractérisé en ce que** l'élément de palier (8) présente un perçage traversant (31) au moyen duquel l'élément de palier (8) peut être couplé à l'organe d'actionnement (85), et **en ce que** l'organe d'actionnement (85) présente un tube de guidage (86), le long duquel l'élément de palier (8) est guidé à translation axiale et sans possibilité de rotation.

6. Dispositif selon la revendication 5, **caractérisé en ce que** le tube de guidage (86) présente une broche d'actionnement (93), qui est montée à rotation au moins dans une région terminale du tube de guidage (86), et **en ce que** la broche d'actionnement (93) est en prise avec un écrou d'actionnement (115) reçu avec possibilité de déplacement en coulissement dans le tube de guidage (86), écrou qui est couplé mécaniquement à l'élément de palier (8) et qui accomplit un mouvement d'actionnement (flèche 118) lors de l'actionnement de la broche d'actionnement (93).

7. Dispositif selon la revendication 6, **caractérisé en ce que** l'écrou d'actionnement (115) présente un doigt d'accouplement (117) radialement saillant, qui traverse vers l'extérieur une fente d'actionnement (87) du tube de guidage (86) qui s'étend environ sur toute la longueur du tube de guidage (86), et **en ce qu'**il est prévu, dans la région du perçage traversant (31) de l'élément de palier (8), un perçage conique radial (32) avec lequel le doigt d'accouplement (117) est en prise par complémentarité de forme.

8. Dispositif selon l'une des revendications 1 à 7, **caractérisé en ce que** les éléments de maintien (39, 40) sont reçus à déplacement par l'intermédiaire d'un coulisseau (49, 50) dans une fente d'actionnement (37, 38) s'étendant sur la moitié de la longueur du profilé d'actionnement respectivement associé (33, 34), et **en ce que** les éléments de maintien (39, 40) présentent respectivement un bloc d'accouplement (41, 42), par lequel l'élément de maintien respectif (39, 40) s'engage dans une creusure élargie (47, 48) de la fente d'actionnement respective (37, 38).

9. Dispositif selon la revendication 8, **caractérisé en ce que** les blocs d'accouplement (41, 42) sont pourvus de faces de butée (respectivement 43, 44 et 45, 46) s'étendant en oblique les unes vers les autres en forme de V, par lesquelles le bloc d'accouplement (41, 42) est fonctionnement relié à la creusure associée (47, 48) de telle sorte que l'angle de rotation de l'élément de maintien respectif (39, 40) dans la rainure de guidage associée (37, 38) est limité.

10. Dispositif selon la revendication 8 ou 9, **caractérisé en ce que** la forme et la configuration du bloc d'accouplement (41, 42), du coulisseau (49, 50) et de la fente de guidage (37, 38) sont choisies de telle sorte que, lorsque l'élément de maintien (39, 40) est sollicité parallèlement au profilé d'actionnement (flèche 77), on obtient un effet de serrage par lequel l'élément de maintien (39, 40) est maintenu de manière immuable, avec autoblocage, sur le profilé d'actionnement (33, 34).

11. Dispositif selon la revendication 2, **caractérisé en ce que** le profilé porteur (3, 4) présente une forme de section approximativement rectangulaire et **en ce que** le profilé d'actionnement (33, 34) est monté à déplacement sur le profilé porteur (3, 4) au moyen d'une rainure d'actionnement ou d'une brèche d'actionnement (35, 36), et **en ce que** la rainure d'actionnement ou la brèche d'actionnement (35, 36) est adaptée à la forme de section du profilé porteur (3, 4) de telle sorte que, lors d'une sollicitation du profilé d'actionnement (33, 34) dans la région de son extrémité libre parallèlement (flèche 75 ou respectivement 76) au profilé porteur (3, 4), on obtient un effet de serrage par lequel le profilé d'actionnement respectif (33, 34) est maintenu de manière immuable, avec autoblocage, sur le profilé porteur (3, 4).

12. Dispositif selon l'une des revendications 1 à 11, **caractérisé en ce que** l'organe d'actionnement (85) présente, dans l'une de ses régions terminales, une douille de palier fixe (122) qui est prévue pour recevoir fixement le deuxième élément d'appui (140) sur l'organe d'actionnement (85).

13. Dispositif selon la revendication 12, **caractérisé en ce que** le deuxième élément d'appui est réalisé sous forme de dispositif de serrage (140) pour recevoir un tube d'amortisseur (176).

14. Dispositif selon la revendication 13, **caractérisé en ce que** le dispositif de serrage (140) présente une plaque de maintien (131) qui est pourvue d'une partie de montage (134) au moyen de laquelle le dispositif de serrage (140) peut être monté à poste fixe conjointement avec l'organe d'actionnement (85) sur un plan de travail (135) d'un établi ou analogue, et **en ce que** la plaque de maintien (131) forme, dans sa région terminale opposée à la partie de montage (134), une partie de plaque (137) s'étendant au-delà du plan de travail (135), laquelle présente un évidement (141) en forme de V pour recevoir le tube d'amortisseur (176).

15. Dispositif selon la revendication 14, **caractérisé en ce que** l'évidement (141) en forme de V forme deux branches de V (142, 143) qui s'étendent sous un angle de 60 à 120°, de préférence de 90° l'une par rapport à l'autre, et **en ce qu'**une fente réceptrice (169) est prévue entre les branches de V (142, 143), laquelle sert, en utilisation, à recevoir une pièce en tôle dépassant radialement du tube d'amortisseur.

16. Dispositif selon la revendication 14 ou 15, **caractérisé en ce que** le dispositif de serrage (140) présente un levier presseur (153) au moyen duquel le tube d'amortisseur à serrer (176) peut être pressé contre l'évidement en forme de V de la partie de plaque (137), et **en ce que** le levier presseur (153) est, par l'une de ses régions terminales, relié à pivotement à la partie de plaque (137) par l'intermédiaire d'une tête de palier (152).

17. Dispositif selon la revendication 16, **caractérisé en ce que** la tête de palier (152) présente une broche de réglage (150) par laquelle la tête de palier (152) est fonctionnellement reliée à un écrou de réglage (148), et **en ce que** l'écrou de réglage (148) est monté à rotation et en fixité axiale sur la partie de plaque (137) du dispositif de serrage (140).

18. Dispositif selon la revendication 17, **caractérisé en ce que**, pour le montage de l'écrou de réglage (148), il est prévu, sur le côté de l'évidement (141) de la partie de plaque (137), deux éléments de palier (146, 147) disposés en dessous de la partie de plaque (137).

19. Dispositif selon l'une des revendications 16 à 18, **caractérisé en ce que** le levier presseur (153) présente, dans sa région terminale opposée à la tête de palier (152), un écrou d'actionnement (158) qui est monté à pivotement sur le levier presseur (153), et **en ce que** l'écrou d'actionnement (158) est en prise avec une broche de traction (159) au moyen de laquelle peuvent être exercées les forces de pressage nécessaires pour le serrage du tube d'amortisseur (176).

20. Dispositif selon la revendication 19, **caractérisé en ce que** la partie de plaque (137) présente, dans sa région latérale opposée aux éléments de palier (146, 147), une patte d'appui (171) dépassant latéralement vers l'extérieur et **en ce que** la broche de traction (159) est pourvue, à son extrémité tournée vers la partie de plaque (137), d'une douille de traction (160) qui présente une nervure formant collet (162) radialement élargie, et **en ce que** le levier presseur (153) et la broche de traction (159) peuvent pivoter par rapport à la partie de plaque de telle sorte que la douille de traction (160) engage par l'arrière, par sa nervure formant collet (162), la patte d'appui (171) à l'encontre de la direction de traction (flèche 173).

21. Dispositif selon l'une des revendications 14 à 20, **caractérisé en ce que**, sur le côté de l'évidement (141) en forme de V, deux branches de guidage (144, 145) disposées environ symétriquement à l'évidement (141) en dessous de la partie de plaque (137) et dépassant en direction du levier presseur (153) sont prévues pour simplifier la mise en place du tube d'amortisseur (176) sur l'évidement (141).

22. Dispositif selon l'une des revendications 14 à 21, **caractérisé en ce qu'**une plaque d'appui supplémentaire (164) qui est disposée en dessous de la partie de plaque (137) est associée à la partie de plaque (137), **en ce que** la plaque d'appui (164) est pourvue d'un évidement (166) en forme de V dont la forme et la disposition correspondent à l'évidement en forme de V de la partie de plaque (137), **en ce que** la plaque d'appui (164) est positionnée sur le dessous sur les éléments de palier (146, 147) et sur les branches de guidage (144, 145), et **en ce que** la plaque d'appui (164) présente, concentriquement au perçage récepteur (132) de la plaque de maintien (131), un perçage traversant (165) par lequel la plaque d'appui (164) peut être posée sur la partie de palier (123) de la douille de palier (122) de l'organe d'actionnement (85).

23. Dispositif selon la revendication 22, **caractérisé en ce qu'**il est prévu, entre la plaque de maintien (131) et la plaque d'appui (164) dans la région du perçage récepteur (132) ou respectivement du perçage traversant (165), une bague d'espacement (166/1) comme écarteur qui peut être posée conjointement avec la plaque d'appui (164) sur la partie de palier (123) de la douille de palier (122), et la plaque d'appui (164) est pourvue d'une patte d'appui (172) dépassant latéralement qui est disposée à distance de la patte d'appui (171) de la partie de plaque (137) et en coïncidence avec la patte d'appui (171) de la partie de plaque (137), et **en ce que** la douille de traction (160) peut, par sa nervure formant collet (162), être amenée en prise simultanément avec la patte d'appui (171) de la partie de plaque (137) et avec la patte d'appui (172) de la plaque d'appui (164).

24. Dispositif selon la revendication 22 ou 23, **caractérisé en ce qu'**un dispositif d'appui (185) est prévu sur le dessous sur la plaque d'appui (164), **en ce que** le dispositif d'appui (185) présente un disque d'appui (213) pouvant être positionné en dessous du tube d'amortisseur (176) reçu dans le dispositif de serrage (140), **en ce que** le dispositif d'appui (185) présente un profilé porteur (186) dirigé verticalement vers le bas, sur lequel est disposé à déplacement vertical un bras porteur (189) s'étendant horizontalement, et **en ce que** le bras porteur (189) est pourvu d'un dispositif de réglage (200 à 211) au moyen duquel le disque d'appui (213) peut être positionné horizontalement et verticalement.
